# EUROPEAN PATENT APPLICATION

(11) **EP 4 293 944 A1**
(43) Date of publication of application: **20.12.2023**
(21) Application number: 21925169.1
(22) Date of filing: 09.02.2021
(51) Int. Cl.: H04L 5/00, H04W 8/24

(54) **UE CAPABILITY PROCESSING METHOD AND APPARATUS, COMMUNICATIONS DEVICE AND STORAGE MEDIUM**

(71) Applicant: Beijing Xiaomi Mobile Software Co., Ltd., Beijing 100085 (CN)
(72) Inventor: GUO, Shengxiang, Beijing 100085 (CN)
(74) Representative: Gunzelmann, Rainer
(86) International application number: PCT/CN2021/076312
(87) International publication number: WO 2022/170500

(57) **Abstract**

Embodiments of the present disclosure provide a UE capability processing method and apparatus, a communications device and a storage medium. The E capability processing method comprises: reporting supported bandwidth combination set (BCS) signaling, wherein the BCS signaling carries a BCS value, and wherein the BCS value is a preset value, and is used for a base station to determine a combination of the channel bandwidth supported by a UE during carrier aggregation. In this way, the embodiments of the present disclosure can report the capability of reporting the channel bandwidth supported by the UE by reporting the existing BCS signaling, and does not need to create a new BCS version for reporting, such that the capability of the channel supported by the UE can be simply and efficiently reported.

## Description

### TECHNICAL FIELD

The disclosure relates to the field of communication technologies, and in particular, to a method and an apparatus for UE capability processing, a communication device and a storage medium.

### BACKGROUND

In the Long Term Evolution (LTE) communication system, the Bandwidth Combination Set (BCS) is introduced. For example, BCS is introduced in the Carrier aggregation and dual connectivity of LTE to indicate the combination of channel bandwidths supported by user equipment (UE). The definition of BCS is followed in the Carrier aggregation and dual connectivity of the new radio (NR) and the dual connectivity between LTE and NR in the same frequency band.

However, in wireless communication systems such as NR, faced with an increasing number of channel bandwidths, the limitation of the combination of channel bandwidths for Carrier aggregation supported by the UE reported through the BCS codebook is increasingly significant. For example, NR currently supports a total of 13 channel bandwidths {5MHz, 10MHz, 15MHz, 20MHz, 25MHz, 30MHz, 40MHz, 50MHz, 60MHz, 70MHz, 80MHz, 90MHz, 100MHz} in the frequency band below 6G GHz. Current discussions include adding channel bandwidths of 35MHz and 45MHz. Thus, when a new channel bandwidth is introduced into an existing frequency band, if there is a need to use the new channel bandwidth in the existing combination of channel bandwidths for the carrier aggregation, a new BCS code should be created for the combination of channel bandwidths to contain the new channel bandwidth. Moreover, once a BCS codebook is created and written into the standard specification, it cannot be modified with additions or deletions. Therefore, reporting using the BCS codebook can lead to a lengthy UE specification standard, making it difficult to write and consult.

### SUMMARY

Embodiments of the present disclosure provide a method and an apparatus for UE capability processing, a communication device and a storage medium.

According to embodiments of a first aspect of the present disclosure, a method for UE capability processing is provided. The method is applied to a UE and includes:
reporting a supported bandwidth combination set (BCS) signaling, wherein the BCS signaling carries one or more BCS value, wherein each BCS value is a preset value, and used for a base station to determine a combination of channel bandwidths supported by a UE in carrier aggregation.

According to embodiments of a second aspect of the present disclosure, a method for UE capability processing is provided. The method is applied to a base station and includes:
receiving a supported BCS signaling;
in response to the BSC signaling carrying one or more BCS value each being a preset value, determining a combination of channel bandwidths supported by a UE in carrier aggregation based on one or more BCS value.

According to embodiments of a third aspect of the present disclosure, an apparatus for UE capability processing is provided. The apparatus is applied to a UE and includes:
a first sending module, configured to report a supported BCS signaling, wherein the BCS signaling carries one or more BCS value, wherein each BCS value is a preset value, and used for a base station to determine a combination of channel bandwidths supported by a UE in carrier aggregation.

According to embodiments of a fourth aspect of the present disclosure, an apparatus for UE capability processing is provided. The apparatus is applied to a base station, and includes:
a second receiving module, configured to receiving a BCS signaling;
a processing module, configured to, in response to the BSC signaling carrying one or more BCS value each being a preset value, determine a combination of channel bandwidths supported by a UE in carrier aggregation based on one or more BCS value.

According to embodiments of a fifth aspect of the present disclosure, a communication device is provided. The communication device includes:
a processor; and
a memory configured to store instructions executable by the processor,
wherein the processor is configured to implement the method for UE capability processing according to any embodiment of the present disclosure when running the executable instructions.

According to embodiments of a sixth aspect of the present disclosure, a computer storage medium is provided. The computer storage medium is stored with a computer executable program. When the executable program is executed by a processor, the method for UE capability processing of any embodiment of the present disclosure is implemented.

The technical solutions provided by embodiments of the present disclosure may include following beneficial effects.

In embodiments of the present disclosure, the UE can report the supported bandwidth combination set (BCS) signaling. The BCS signaling carries one or more BCS value, each of which is a preset value, and can be used for the base station to determine the combination of channel bandwidths supported by the UE in carrier aggregation. Thus, in embodiments of the disclosure, when a new supported channel bandwidth is introduced into the existing combination of supported channel bandwidths during the carrier aggregation, it is not necessary to report the capability of the combination of channel bandwidths supported by UE by creating a new BCS codebook, and the UE can report the combination of channel bandwidths supported by the UE directly by carrying one or more BCS value being a predetermined value in the existing BCS signaling. Thus, it is easy and efficient to report the UE's capability of the combination of supported channel bandwidths in carrier aggregation.

It should be understood that the general description above and the detailed description in the following are only illustrative and explanatory, and do not limit embodiments of the present disclosure.

### BRIEF DESCRIPTION OF THE DRAWINGS

Fig. 1 is a schematic diagram of a wireless communication system.
Fig. 2 is a schematic diagram of a method for UE capability processing according to an exemplary embodiment.
Fig. 3 is a schematic diagram of a method for UE capability processing according to an exemplary embodiment.
Fig. 4 is a schematic diagram of a method for UE capability processing according to an exemplary embodiment.
Fig. 5 is a schematic diagram of a method for UE capability processing according to an exemplary embodiment.
Fig. 6 is a schematic diagram of a method for UE capability processing according to an exemplary embodiment.
Fig. 7 is a schematic diagram of a method for UE capability processing according to an exemplary embodiment.
Fig. 8 is a schematic diagram of a method for UE capability processing according to an exemplary embodiment.
Fig. 9 is a schematic diagram of a method for UE capability processing according to an exemplary embodiment.
Fig. 10 is a block diagram of an apparatus for UE capability processing according to an exemplary embodiment.
Fig. 11 is a block diagram of an apparatus for UE capability processing according to an exemplary embodiment.
Fig. 12 is a block diagram of a UE according to an exemplary embodiment.
Fig. 13 is a block diagram of a base station according to an exemplary embodiment.

### DETAILED DESCRIPTION

The exemplary embodiments will be described in detail here, and examples thereof are shown in the accompanying drawings. When the following descriptions refer to the accompanying drawings, unless otherwise indicated, the same numbers in different drawings represent the same or similar elements. The implementations described in the following exemplary embodiments do not represent all implementations consistent with embodiments of the present disclosure. Rather, they are merely examples of apparatuses and methods consistent with some aspects of the disclosure as detailed in the appended claims.

The terms described in the embodiments of the present disclosure are only for the purpose of describing specific embodiments and are not intended to limit the embodiments of the present disclosure. The singular forms "a", "the" used in the embodiments of the disclosure and the appended claim are also intended to include plural forms, unless the context clearly indicates otherwise. It should also be understood that the term "and/or" used in the present disclosure means and includes any or all possible combinations of one or more associated listed items.

It should be understood that, although the terms first, second, third, etc. may be used in embodiments of the present disclosure to describe various information, such information shall not be limited to these terms. These terms are only used to distinguish the same category of information. For example, subject to the scope of embodiments of the present disclosure, first information may also be referred to as second information, and similarly, and second information may also be referred to as first information. It depends on the context. For example, the word "in case of", "if' as used herein may be interpreted as "in a case that" or "when" or "in response to determining".

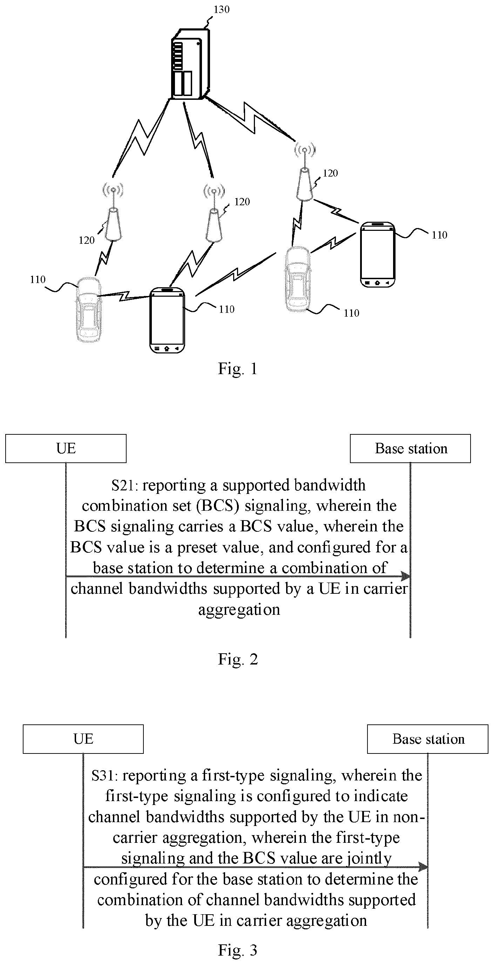

FIG. 1 is a diagram illustrating a structure of a wireless communication system in embodiments of the present disclosure. As illustrated in FIG. 1, the wireless communication system is a communication system based on a cellular mobile communication technology. The wireless communication system may include several UEs 110 and several base stations 120.

The UE 110 may refer to a device that provides voice and/or data connectivity for users. The UE 110 may communicate with one or more core networks through a radio access network (RAN). The UE 110 may be an internet of things terminal, for example, a sensor device, a mobile phone (or referred to as a cellular phone) and a computer having an internet of things terminal, for example, may be a fixed, portable, compact, handheld, computer built-in or vehicle apparatus, for example, a station (STA), a subscriber unit, a subscriber station, a mobile station, a mobile, a remote station, an access point, a remote terminal, an access terminal, a user terminal, a user agent, a user device or a user equipment(UE). Or, the UE 110 may be a device of an unmanned vehicle. Or, the UE 110 also may be a vehicle device, for example, may be a vehicle computer with a wireless communication function, or a wireless terminal externally connected to a vehicle computer. Or, the UE 110 also may be a roadside device, for example, may be a street lamp, a signal lamp or other roadside device with a wireless communication function.

The base station 120 may be a network side device in the wireless communications system. The wireless communication system may be a 4th generation mobile communication (4G) system, also referred to as a long term evolution (LTE) system; or the wireless communications system may be a 5G system, also referred to as a new radio (NR) system or a 5G NR system. Or, the wireless communication system may be a next generation system of the 5G system. An access network in the 5G NR system may be referred to as a new generation-radio access network (NG-RAN). Or, the base station is a MTC system.

The base station 120 may be an eNB adopted in the 4G system. Or, the base station 120 may be a base station with a centralized-distributed architecture (gNB) in the 5G system. When the base station 120 adopts the centralized-distributed architecture, it generally includes a central unit (CU) and at least two distributed units (DUs). Protocol stacks at a Packet Data Convergence Protocol (PDCP) layer, a Radio Link Control (RLC) layer and a Media Access Control (MAC) layer are configured in the CU; a physical (PHY) layer protocol is configured in the DU. The specific implementation of the base station 120 is not limited in embodiments of the disclosure.

The base station 120 may establish a wireless connection with the UE 110 through a radio air interface. In different implementations, the radio air interface is a radio air interface based on a 4G standard; or, the radio air interface is a radio air interface based on a 5G standard, for example, the radio air interface is a new air interface; or, the radio air interface may be a radio air interface based on a next generation mobile communication network technology standard of a 5G.

In some embodiments, an end to end (E2E) connection further may be established between UEs 110, for example, in scenes such as vehicle to vehicle (V2V) communication, vehicle to infrastructure (V2I) communication and vehicle to pedestrian (V2P) communication in vehicle to everything (V2X).

Here, the UE above may be considered as a terminal device in following embodiments.

In some embodiments, the wireless communication system may further include a network management device 130.

Several base stations 120 may be connected with the network management device 130. The network management device 130 may be a core network device in the wireless communications system, for example, the network management device 130 may be a mobility management entity (MME) in an evolved packet core (EPC). Or, the network management device may be other core network devices, for example, a Serving GateWay (SGW), a Public Data Network GateWay (PGW), a Policy and Charging Rules Function (PCRF) or a Home Subscriber Server (HSS), etc. The implementation form of the network management device 130 is not limited in embodiments of the disclosure.

In order to better understand the technical solution described in any of embodiments of the present disclosure, the channel bandwidth supported by the UE is first explained.

In one embodiment, the UE may report the following information: channel bandwidths supported on carriers in non-carrier aggregation, channel bandwidths supported by respective carriers in carrier aggregation, and/or maximum channel bandwidths supported by respective carriers in carrier aggregation. The network (such as the base station) can configure the channel bandwidths supported by the UE in carrier aggregation through this information.

In existing technology, typically, when a new channel bandwidth is introduced on an existing frequency band, if the new channel bandwidth is used within the existing combination of supported channel bandwidths, a new bandwidth combination set (BCS) code must be created to contain the new channel bandwidth. Once a BCS codebook is created and written into a standard specification, it cannot be added, subtracted, or modified. This will result in a very lengthy reporting standard for UE's capability of supported channel bandwidths, and it is not easy to write and subscribe.

As shown in Fig. 2, embodiments of the present disclosure provide a method for UE capability processing. The method is applied to a UE and includes:
step S21, reporting a supported bandwidth combination set (BCS) signaling, wherein the BCS signaling carries one or more BCS value, wherein each BCS value is a preset value and is used for a base station to determine a combination of channel bandwidths supported by the UE in carrier aggregation.

In some embodiments, the UE may be any mobile terminal or fixed terminal. For example, the UE may be, but is not limited to, a mobile phone, a computer, a server, a wearable device, a game console, or a multimedia device.

In some embodiments, the base station may be of various types. For example, the base station may be, but is not limited to, a 3G network base station, a 4G network base station, a 5G network base station, or other evolutionary base stations. In other embodiments, the base station may also be a terrestrial network base station or a non-terrestrial network base station.

In some embodiments, the BCS value is a preset value, and is used for a network side entity to determine the combination of channel bandwidths supported by the UE in carrier aggregation. Here, the network side entity may be, but is not limited to the base station or access point device.

In an embodiment, the BCS value is a preset value, and indicates the combination of channel bandwidths supported by the UE on respective carriers in non-carrier aggregation. Thus, in embodiments of the present disclosure, the UE can report the combination of channel bandwidths supported by the UE on respective carriers in non-carrier aggregation by reporting one or more BCS value carried as a preset value without reporting the BCS codebook, so as to meet different requirements of reporting channel bandwidths supported by the UE in non-carrier aggregation. It is possible to report the channel bandwidths supported by the UE on respective carriers in non-carrier aggregation in a more efficient and simplified way.

For example, one or more BCS value has 1 bit. For example, when the 1 bit is "0", it may be used to indicate that the combination of channel bandwidths supported by the UE on respective carriers in non-carrier aggregation is {5MHz, 10MHz, 15MHz, 20MHz, 25MHz, 30MHz}. For another example, when the 1 bit is "1", it may be used to indicate that the combination of channel bandwidths supported by the UE on respective carriers in non-carrier aggregation is {5MHz, 10MHz, 15MHz, 20MHz, 25MHz, 30MHz, 40MHz, 50MHz}.

For example, one or more BCS value has multiple bits. For example, if one or more BCS value has two bits and the two bits are " 11", it may be used to indicate that the combination of channel bandwidths supported by the UE on respective carriers in non-carrier aggregation is {5MHz, 10MHz, 15MHz, 20MHz, 25MHz, 30MHz, 40MHz, 50MHz, 60MHz, 70MHz, 80MHz, 90MHz, 100Mhz}. For another example, if one or more BCS value has three bits, and the three bits are "111", it may be used to indicate that the combination of channel bandwidths supported by the UE on respective carriers in non-carrier aggregation is {5MHz, 10MHz, 15MHz, 20MHz, 25MHz, 30MHz, 35MHz, 40MHz, 45MHz, 50MHz, 60MHz, 70MHz, 80MHz, 90MHz, 100Mhz}. For yet another example, if one or more BCS value has 4 bits and the 4 bits are "1111", it is used to indicate that the combination of channel bandwidths supported by the UE on respective carriers in non-carrier aggregation is {5MHz, 10MHz, 15MHz, 20MHz, 25MHz, 30MHz, 35MHz, 40MHz, 45MHz, 50MHz, 60MHz, 65MHz, 70MHz, 75MHz, 80MHz, 90MHz, 100Mhz}.

In another embodiment, one or more BCS value is BCS4, which is used to indicate the whole combination of channel bandwidths supported by the UE on respective carriers in non-carrier aggregation. The whole combination of supported channel bandwidths here can refer to the combination of all channel bandwidths that can be supported. The whole combination of supported channel bandwidths here can also refer to the complete set of channel bandwidths. In this way, in embodiments of the present disclosure, the UE can indicate the whole combination of channel bandwidths supported by the UE on respective carriers in non-carrier aggregation by reporting one or more BCS value carried as a preset value without reporting the BCS codebook. In this way, for different UEs, such as UEs of different operators, it is not necessary to define different combinations of channel bandwidths supported by UEs on respective carriers in non-carrier aggregation, so that UEs can report the combination of channel bandwidths which is a full set, to meet the reporting of channel bandwidths supported by UEs of various operators on respective carriers in non-carrier aggregation.

In one embodiment, one or more BCS value may be carried in one or more bits of the BCS signaling. That is to say, in embodiments of the present disclosure, the BCS signaling may be reused, in which a predetermined bit carries one or more BCS value. For example, the 4th bit of the BCS signaling carries one or more BCS value, or the 4th and the 5th bits of the BCS signaling carry one or more BCS value. Of course, in other embodiments, the predetermined bit may be a sub segment or information field that has no defined meaning in the BCS signaling.

In one embodiment, if at least one bit of the multiple bits carried by the BCS signaling is used to indicate the channel bandwidths selected or supported during carrier aggregation, then the bit value of at least one bit is "1". Therefore, in embodiments of the present disclosure, all bit values of the multiple bits may be "1", to be used as the preset value.

In an embodiment, the combination of channel bandwidths may be a set of channel bandwidths. For example, the channel bandwidths supported by the UE in carrier aggregation include 5MHz, 10MHz, 15MHz and 35MHZ. The combination of channel bandwidths may be expressed as {5MHz, 10MHz, 15MHz, 35MHZ}. Of course, the combination of channel bandwidths may be expressed in various ways. In this embodiment, only an example is given and does not limit the specific implementation.

Of course, in embodiments of the present disclosure, one or more BCS value may also be used for the base station to determine the combination of channel bandwidths supported by the UE in non-carrier aggregation.

In embodiments of the present disclosure, the BCS signaling can be reported by the UE. The BCS signaling carries one or more BCS value, each of which is a preset value, and can be used for the base station to determine the combination of channel bandwidths supported by the UE in carrier aggregation. Thus, in embodiments of the present disclosure, when a new supported channel bandwidth is introduced into the existing combination of supported channel bandwidths during the carrier aggregation, it is not necessary to report the capability of the combination of channel bandwidths supported by UE by creating a new BCS codebook, and the UE can report the combination of channel bandwidths supported by the UE directly by carrying one or more BCS value being a predetermined value in the existing BCS signaling. Thus, it is easy and efficient to report the UE's capability of the combination of supported channel bandwidths in carrier aggregation.

In addition, in embodiments of the present disclosure, when different UEs, for example, UEs of different operators, need to report different supported channel bandwidths in non-carrier aggregation, the reporting requirements of different UEs, for example, UEs of different operators, can be meet by reporting the full set of channel bandwidths supported by UEs on respective carriers in non-carrier aggregation. In this way, it is possible to report the UE's capability of supported channel bandwidths in a further simplified and efficient manner, which can adapt to more application scenarios.

It should be noted that those skilled in the art can understand that the methods provided in embodiments of the present disclosure can be executed separately or together with some methods in the disclosed embodiments or related technologies.

As shown in Fig. 3, a method for UE capability processing is provided. The method is applied to a UE and includes:
step S31, reporting a first-type signaling, wherein the first-type signaling indicates a channel bandwidth supported by the UE in non-carrier aggregation, and wherein the first-type signaling and one or more BCS value are jointly used for the base station to determine the combination of channel bandwidths supported by the UE in carrier aggregation.

In some embodiments, the first-type signaling includes but is not limited to at least one of:
a channelBWs-UL signaling, indicating an uplink channel bandwidth supported by the UE in non-carrier aggregation;
a channelBWs-DL signaling, indicating a downlink channel bandwidth supported by the UE in non-carrier aggregation;
a channelBWs-UL-v1590 signaling, indicating that an uplink channel bandwidth supported by the UE in non-carrier aggregation is 70MHz;
a channelBWs-DL-v1590 signaling, indicating that a downlink channel bandwidth supported by the UE in non-carrier aggregation is 70MHz;
a channelBW-90mhz signaling, indicating that an uplink channel bandwidth and/or a downlink channel bandwidth supported by the UE in non-carrier aggregation is 90MHz;
a supportedBandwidthUL signaling, indicating a maximum uplink bandwidth supported by the UE in non-carrier aggregation;
a supportedBandwidthDL signaling, indicating a maximum downlink bandwidth supported by the UE in non-carrier aggregation.

In an embodiment, the ChannelBWs-UL signaling indicates a combination of uplink channel bandwidths other than the channel bandwidth indicated by the channelBWs-UL-v1590 signaling, the uplink channel bandwidth indicated by the channelBW-90mhz signaling, and the maximum uplink bandwidth indicated by the supportedBandwidthUL signaling.

In another embodiment, the ChannelBWs-DL signaling indicates a combination of downlink channel bandwidths other than the channel bandwidth indicated by the channelBWs-DL-v1590 signaling, the downlink channel bandwidth indicated by the channelBW-90mhz signaling, and the maximum downlink bandwidth indicated by the supportedBandwidthDL signaling.

Of course, in other embodiments, the first-type signaling may also be used to indicate other numerical channel bandwidths or other range of channel bandwidths supported in non-carrier aggregation. The other numerical channel bandwidths may refer to the channel bandwidths other than the channel bandwidths indicated by channelBWs-UL-v1590, channelBWs-DL-v1590, and channelBW-90mhz.

In one embodiment, the channelBWs-UL signaling indicates the channel bandwidth supported by the UE on carriers in non-carrier aggregation. In this way, in embodiments of the present disclosure, the channelBWs-UL signaling can be reported by the UE to indicate the uplink channel bandwidth supported by the UE on one or more carriers in non-carrier aggregation. For example, there are N carriers including carrier 1, carrier 2, ..., carrier N, where N is an integer greater than 1, then the channelBWs-UL signaling indicates the channel bandwidth on N carriers when the UE is in non-carrier aggregation, or indicate the uplink channel bandwidth on a corresponding carrier or multiple corresponding carriers when the UE is in non-carrier aggregation.

In one embodiment, the channelBWs-DL signaling indicates the channel bandwidth supported by the UE on the carrier in non-carrier aggregation. Thus, in embodiments of the present disclosure, the channelBWs-DL signaling can be reported by the UE to indicate the downlink channel bandwidth supported by the UE on one or more carriers in non-carrier aggregation. For example, there are N carriers including carrier 1, carrier 2, ..., carrier N, where N is an integer greater than 1, then the channelBWs-DL signaling indicates the channel bandwidth on N carriers when the UE is in non-carrier aggregation, or to indicate the downlink channel bandwidth on a corresponding carrier or multiple corresponding carriers when the UE is in non-carrier aggregation.

In one embodiment, the channelBWs-UL-v1590 signaling indicates that the downlink channel bandwidth supported by the UE on the carrier in non-carrier aggregation is 70MHz. Thus, in embodiments of the present disclosure, the channelBWs-UL-v1590 signaling can be reported by the UE, to indicate that the uplink channel bandwidth supported by the UE on one or more carriers in non-carrier aggregation is 70MHz. For example, there are N carriers including carrier 1, carrier 2, ..., carrier N, where N is an integer greater than 1, then the channelBWs-UL-v1590 signaling indicates that the channel bandwidth of the UE on N carriers in non-carrier aggregation is 70MHz, or indicate that the uplink channel bandwidth of the UE on a corresponding carrier or multiple corresponding carriers in non-carrier aggregation is 70MHz.

In one embodiment, the channelBWs-DL-v1590 signaling indicates that the uplink channel bandwidth supported by the UE on the carrier in non-carrier aggregation is 70HMz. Thus, in embodiments of the present disclosure, channelBWs-DL-v1590 can be reported by the UE, indicating that the downlink channel bandwidth supported by the UE on one or more carriers in non-carrier aggregation is 70MHz. For example, there are N carriers including carrier 1, carrier 2,... carrier N, where N is an integer greater than 1, then the channelBWs-DL-v1590 signaling indicates the channel bandwidth of the UE on N carriers in non-carrier aggregation, or indicate that the downlink channel bandwidth of the UE on a corresponding carrier or multiple corresponding carriers in non-carrier aggregation is 70MHz.

In one embodiment, the channelBW-90mhz signaling indicates that the uplink channel bandwidth and/or downlink channel bandwidth supported by the UE on the carrier in non-carrier aggregation is 90MHz. In this way, in embodiments of the present disclosure, channelBW-90mhz can be reported by the UE, indicating that the uplink channel bandwidth and/or downlink channel bandwidth supported by the UE on one or more carriers in non-carrier aggregation is 90MHz. For example, there are N carriers including carrier 1, carrier 2,... carrier N, where N is an integer greater than 1, then the channelBW-90mhz signaling indicates the channel bandwidth of the UE on N carriers in non-carrier aggregation, or indicate that the uplink channel bandwidth and/or downlink channel bandwidth of the UE on a corresponding carrier or multiple corresponding carriers in non-carrier aggregation is 90MHz.

In one embodiment, the supportedBandwidthUL signaling indicates the maximum uplink bandwidth supported by the LTE on the carrier in non-carrier aggregation. Thus, in embodiments of the present disclosure, the UE can report the supportedBandwidthUL signaling to indicate the maximum uplink bandwidth supported by the UE on one or more carriers in non-carrier aggregation. For example, there are N carriers including carrier 1, carrier 2,... carrier N, where N is an integer greater than 1, then the supportedBandwidthUL signaling indicates the channel bandwidth of the UE on N carriers in non-carrier aggregation, or to indicate the maximum uplink bandwidth supported by the UE on a corresponding carrier or multiple corresponding carriers in non-carrier aggregation.

In one embodiment, the supportedBandwidthDL signaling indicates the maximum downlink bandwidth supported by the UE on the carrier in non-carrier aggregation. Thus, in embodiments of the present disclosure, the UE can report the supportedBandwidthDL signaling to indicate the maximum downlink bandwidth supported by the UE on one or more carriers in non-carrier aggregation. For example, there are N carriers including carrier 1, carrier 2,... carrier N, where N is an integer greater than 1, then the supportedBandwidthDL signaling indicates the channel bandwidth of the UE on N carriers in non-carrier aggregation, or to indicate the maximum downlink bandwidth supported by the UE on a corresponding carrier or multiple corresponding carriers in non-carrier aggregation.

The method for UE capability processing provided by embodiments of the present disclosure may include but not limited to at least one of:
reporting the channelBWs-UL signaling;
reporting the channelBWs-DL signaling;
reporting the channelBWs-UL-v1590 signaling;
reporting the channelBWs-DL-v1590 signaling;
reporting the channelBW-90mhz signaling;
reporting the supportedBandwidthUL signaling;
reporting the supportedBandwidthDL signaling.

Thus, in embodiments of the present disclosure, 0, one or more of the channelBWs-UL signaling, channelBWs-DL signaling, channelBWs-UL-v1590 signaling, channelBWs-DL-ν 1590 signaling, channelBW-90mhz signaling, supportedBandwidthUL signaling and supportedBandwidthDL signaling can be reported by the UE, so that the base station can determine the combination of channel bandwidths supported by the UE in carrier aggregation.

In one embodiment, if the UE reports the channelBWs-UL signaling, the base station can determine that the UE supports the combination of uplink channel bandwidths other than 70MHz, 90MHz and the maximum uplink bandwidth indicated by the supportedBandwidthUL signaling, in carrier aggregation.

In another embodiment, if the UE reports the channelBWs-DL signaling, the base station can determine that the UE supports the combination of downlink channel bandwidths other than 70MHz, 90MHz and the maximum downlink bandwidth indicated by the supportedBandwidthDL signaling, in carrier aggregation.

In an embodiment, if the UE reports the channelBWs-UL signaling and the channelBWs-UL-v1590 signaling, the base station can determine that the UE supports the combination of uplink channel bandwidths other than 90MHz and the maximum uplink bandwidth indicated by the supportedBandwidthUL signaling, in carrier aggregation.

In another embodiment, if the UE reports the channelBWs-DL signaling and the channelBWs-DL-v1590 signaling, the base station can determine that the UE supports the combination of downlink channel bandwidths other than 90MHz and the maximum downlink bandwidth indicated by the supportedBandwidthDL signaling, in carrier aggregation.

In an embodiment, if the UE reports the channelBWs-UL signaling, the channelBWs-UL-v1590 signaling and the channelBW-90mhz signaling, and the maximum uplink bandwidth indicated by the supportedBandwidthUL signaling is 100MHz, the base station can determine that the UE supports the combination of uplink channel bandwidths other than 100MHz, in carrier aggregation.

In an embodiment, if the UE reports the channelBWs-DL signaling, the channelBWs-DL-v1590 signaling and the channelBW-90mhz signaling, and the maximum downlink bandwidth indicated by the supportedBandwidthDL signaling is 100MHz, the base station can determine that the UE supports the combination of downlink channel bandwidths other than 100MHz, in carrier aggregation.

In an embodiment, if the UE reports the channelBWs-UL signaling, the channelBWs-UL-v1590 signaling, the channelBW-90mhz signaling, and the supportedBandwidthUL signaling, the base station can determine that the UE supports the whole combination of uplink channel bandwidths in carrier aggregation.

In another embodiment, if the UE reports the channelBWs-DL signaling, the channelBWs-DL-v1590 signaling, the channelBW-90mhz signaling, and the supportedBandwidthDL signaling, the base station can determine that the UE supports the whole combination of downlink channel bandwidths in carrier aggregation.

The method for UE capability processing provided by embodiments of the present disclosure may include but not limited to at least one of:
reporting the channelBWs-UL signaling separately in different sub frequency bands;
reporting the channelBWs-DL signaling separately in different sub frequency bands;
reporting the channelBWs-UL-v1590 signaling separately in different sub frequency bands;
reporting the channelBWs-DL-v1590 signaling separately in different sub frequency bands;
reporting the channelBWs-90mhz signaling separately in different sub frequency bands;
reporting the supportedBandwidthUL signaling separately in different sub frequency bands;
reporting the supportedBandwidthDL signaling separately in different sub frequency bands.

In embodiments of the present disclosure, the frequency band in which the UE is located can be divided into one or more sub frequency bands, so that the UE can report 0, one or more of the channelBWs-UL signaling, the channelBWs-DL signaling, the channelBWs-UL-v1590 signaling, the channelBWs-DL-v1590 signaling, the channelBW-90mhz signaling, the supportedBandwidthUL signaling, and the supported BandwidthDL signaling in different sub frequency bands, so that the base station can determine the combination of channel bandwidths supported by the UE in different sub frequency bands in carrier aggregation.

In an embodiment, the first-type signaling includes but is not limited to at least one of:
a supportedBandwidthUL signaling, indicating a maximum uplink bandwidth supported by the UE in carrier aggregation;
a supportedBandwidthDL signaling, indicating a maximum downlink bandwidth supported by the UE in carrier aggregation.

Thus, in embodiments of the present disclosure, the supportedBandwidthUL signaling and/or the supportedBandwidthDL signaling can be reused. For example, the UE can report the supportedBandwidthUL signaling and/or supportedBandwidthDL signaling twice consecutively to make the base station know the maximum uplink bandwidth supported by the UE in non-carrier aggregation and carrier aggregation, and/or to make the base station know the minimum uplink bandwidth supported by the UE in non-carrier aggregation and carrier aggregation. For example, the supportedBandwidthUL signaling is reported twice consecutively. The first time, the supportedBandwidthUL signaling is reported to indicate the maximum uplink bandwidth supported in non-carrier aggregation, and the second time, the supportedBandwidthUL signaling is reported to indicate the maximum uplink bandwidth supported in carrier aggregation. For another example, the supportedBandwidthDL signaling is reported twice consecutively. The first time, the supportedBandwidthDL signaling is reported to indicate the maximum downlink bandwidth supported in non-carrier aggregation, and the second time, the supportedBandwidthDL signaling is reported to indicate the maximum downlink bandwidth supported in carrier aggregation.

In an embodiment, the first-type signaling includes but is not limited to at least one of:
a supportedBandwidthUL signaling, indicating a maximum uplink bandwidth supported by the UE on a carrier in non-carrier aggregation, or indicate a maximum uplink bandwidth supported by the UE on the carrier in carrier aggregation; and
a supportedBandwidthDL signaling, indicating a maximum downlink bandwidth supported by the UE on a carrier in non-carrier aggregation, or indicate a maximum downlink bandwidth supported by the UE on the carrier in carrier aggregation.

Thus, in embodiments of the present disclosure, the supportedBandwidthUL signaling and/or the supportedBandwidthDL signaling can be reused. For example, the UE can report the supportedBandwidthUL signaling and/or supportedBandwidthDL signaling twice consecutively to make the base station know the maximum uplink bandwidth supported by the UE in non-carrier aggregation and carrier aggregation, and/or to make the base station know the minimum uplink bandwidth supported by the UE in non-carrier aggregation and carrier aggregation. For example, the supportedBandwidthUL signaling is reported twice consecutively. The first time, the supportedBandwidthUL signaling is reported to indicate the maximum uplink bandwidth supported in non-carrier aggregation, and the second time, the supportedBandwidthUL signaling is reported to indicate the maximum uplink bandwidth supported in carrier aggregation. For another example, the supportedBandwidthDL signaling is reported twice consecutively. The first time, the supportedBandwidthDL signaling is reported to indicate the maximum downlink bandwidth supported in non-carrier aggregation, and the second time, the supportedBandwidthDL signaling is reported to indicate the maximum downlink bandwidth supported in carrier aggregation.

Of course, in embodiments of the present disclosure, one or more BCS value and the first-type signaling may also be used by the base station to determine the combination of channel bandwidths supported by the UE in non-carrier aggregation.

In embodiments of the present disclosure, by reporting the first-type signaling, the capability of channel bandwidths supported by different UEs, such as UEs of different operators, in non-carrier aggregation can be reported. This enables the base station to determine the combination of channel bandwidths supported by different UEs in carrier aggregation based on one or more BCS value and the first-type signaling. For example, a union of the supported channel bandwidth indicated by each signaling in the first-type signaling can be determined as the combination of channel bandwidths supported by the UE. In this way, the capability of the channel bandwidth of the UE can be reported efficiently and simply, while the base station does not need to measure on the whole combination of channel bandwidths for different UEs, thereby improving the measurement efficiency of the base station and saving measurement resources.

It should be noted that those skilled in the art can understand that the methods provided in embodiments of the present disclosure can be executed separately or together with some methods in the disclosed embodiments or related technologies.

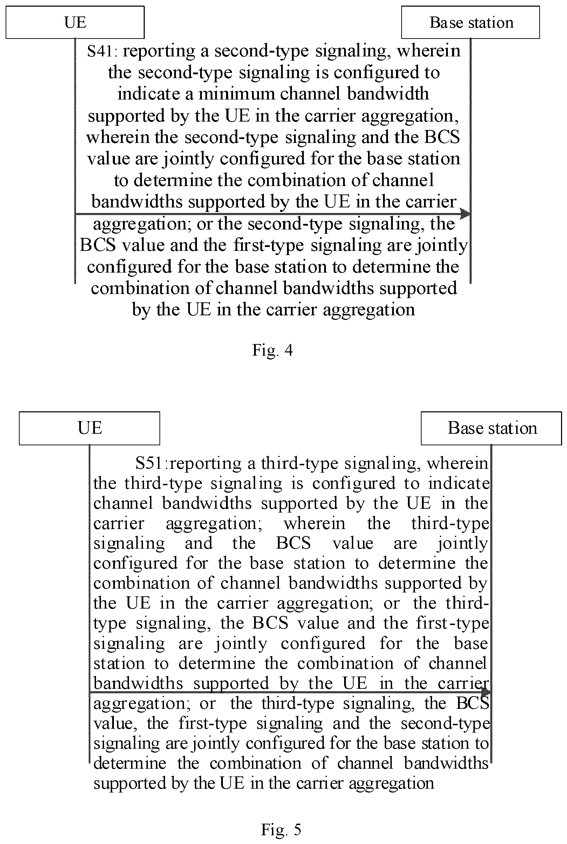

As shown in Fig. 4, a method for UE capability processing is provided. The method is applied to a UE, and includes:
Step S41, reporting a second-type signaling, wherein the second-type signaling indicates a minimum channel bandwidth supported by the UE in carrier aggregation, wherein the second-type signaling and one or more BCS value are jointly used for the base station to determine the combination of bandwidths supported by the UE in carrier aggregation, or the second-type signaling and one or more BCS value and the first-type signaling are jointly used for the base station to determine the combination of bandwidths supported by the UE in carrier aggregation.

In some embodiments, the second-type signaling includes but is not limited to at least one of:
a supported minimum uplink bandwidth signaling, indicating a minimum uplink bandwidth supported by the UE in carrier aggregation; and
a supported minimum downlink bandwidth signaling, indicating a minimum downlink bandwidth supported by the UE in carrier aggregation.

In an embodiment, the supported minimum uplink bandwidth signaling includes a supportedMinBandwidthUL signaling.

In an embodiment, the supported minimum downlink bandwidth signaling includes a supportedMinBandwidthDL signaling.

In an embodiment, the supported minimum uplink bandwidth signaling indicates the minimum uplink bandwidth supported on the carrier in carrier aggregation. In this way, in embodiments of the present disclosure, the UE can report the supported minimum uplink bandwidth signaling to indicate the minimum uplink bandwidth supported by the UE on one or more carriers in carrier aggregation. For example, there are N carriers including carrier 1, carrier 2,... carrier N, where N is an integer greater than 1, then the supported minimum uplink bandwidth signaling indicates the minimum uplink bandwidth of the UE on N carriers in carrier aggregation, or to indicate the minimum uplink bandwidth of the UE on a corresponding carrier or multiple corresponding carriers in carrier aggregation.

In an embodiment, the supported minimum downlink bandwidth signaling indicates the minimum downlink bandwidth supported on the carrier in carrier aggregation. In this way, in embodiments of the present disclosure, the UE can report the supported minimum downlink bandwidth signaling to indicate the minimum downlink bandwidth supported by the UE on one or more carriers in carrier aggregation. For example, there are N carriers including carrier 1, carrier 2,... carrier N, where N is an integer greater than 1, then the supported minimum downlink bandwidth signaling indicates the minimum downlink bandwidth of the UE on N carriers in carrier aggregation, or to indicate the minimum downlink bandwidth of the UE on a corresponding carrier or multiple corresponding carriers in carrier aggregation.

The method for UE capability processing provided by embodiments of the present disclosure may include but not limited to at least one of:
reporting the supported minimum uplink bandwidth signaling; and
reporting the supported minimum downlink bandwidth signaling.

Thus, in embodiments of the present disclosure, the UE can report the second-type signaling, for example, report 0 or 1 or more of the supported minimum uplink bandwidth signaling and the supported minimum downlink bandwidth signaling, so that the base station can determine the combination of channel bandwidths supported by the UE in carrier aggregation based on one or more BCS value and the second-type signaling, or based on one or more BCS value, the first-type -signaling and the second-type signaling. For example, the range of uplink channel bandwidths supported by the UE in carrier aggregation can be determined based on the supported uplink bandwidth signaling in the first-type signaling and the supported minimum uplink bandwidth signaling in the second-type signaling.

In addition, embodiments of the present disclosure can report the capabilities of different channel bandwidths supported by different UEs in carrier aggregation. For example, the minimum uplink bandwidth indicated in the supported minimum uplink bandwidth signaling reported by UE A is different from the minimum uplink bandwidth indicated in the supported minimum uplink bandwidth signaling reported by UE B, so that the base station only needs to measure the corresponding supported channel bandwidth for different UEs, without the need to measure the whole combination of channel bandwidths for all UEs.

Thus, embodiments of the present disclosure can not only conveniently and efficiently report the capability of channel bandwidth of the UE, but also enable the base station to not need to measure the combination of all channel bandwidths for different UEs, thereby improving the measurement efficiency of the base station, saving measurement resources, and adapting to more application scenarios in which the capability of channel bandwidth of the UE is reported.

The method for UE capability processing provided by embodiments of the present disclosure may include but not limited to at least one of:
reporting the minimum uplink bandwidth signaling in different sub frequency bands;
reporting the minimum downlink bandwidth signaling in different sub frequency bands.

In embodiments of the present disclosure, the frequency band where the UE is located can be divided into one or more sub frequency bands, so that the UE can report 0 or 1 or more of the minimum uplink bandwidth signaling and minimum downlink bandwidth signaling in different sub frequency bands, and thus the base station can determine the combinations of channel bandwidths of the UE in different sub frequency bands in carrier aggregation.

It should be noted that those skilled in the art can understand that the methods provided in the disclosed embodiments can be executed separately or together with some methods in the disclosed embodiments or related technologies.

As shown in Fig. 5, a method for UE capability processing is provided. The method is applied to a UE, and includes:
Step S51, reporting a third-type signaling, wherein the third-type signaling indicates channel bandwidths supported by the UE in the carrier aggregation; wherein the third-type signaling and one or more BCS value are jointly used for the base station to determine the combination of channel bandwidths supported by the UE in the carrier aggregation; or the third-type signaling, one or more BCS value and the first-type signaling are jointly used for the base station to determine the combination of channel bandwidths supported by the UE in the carrier aggregation; or the third-type signaling, one or more BCS value, the first-type signaling and the second-type signaling are jointly used for the base station to determine the combination of channel bandwidths supported by the UE in the carrier aggregation.

In some embodiments, the third-type signaling includes but is not limited to at least one of:
a carrier aggregation uplink channel bandwidth signaling, indicating uplink channel bandwidths supported by the UE in the carrier aggregation;
a carrier aggregation downlink channel bandwidth signaling, indicating downlink channel bandwidths supported by the UE in the carrier aggregation.

In an embodiment, the carrier aggregation uplink channel bandwidth signaling includes a channelBWs-UL-ca signaling.

In an embodiment, the carrier aggregation downlink channel bandwidth signaling includes a channelBWs-DL-ca signaling.

In an embodiment, the carrier aggregation uplink channel bandwidth signaling indicates the uplink channel bandwidth supported on the carrier in carrier aggregation. For example, the carrier aggregation uplink channel bandwidth signaling indicates the uplink channel bandwidth supported on each carrier in carrier aggregation. For another example, there are N carriers for carrier aggregation, including carrier 1, carrier 2,... carrier N, where N is an integer greater than 1, then the carrier aggregation uplink channel bandwidth instruction indicates the uplink channel bandwidths of the UE on N carriers in carrier aggregation, or indicate the uplink channel bandwidth of the UE on a corresponding carrier or multiple corresponding carriers in carrier aggregation. Thus, in embodiments of the present disclosure, the UE can report the carrier aggregation uplink channel bandwidth signaling to indicate the uplink channel bandwidths supported by the UE on one or more carriers in carrier aggregation.

In an embodiment, the carrier aggregation downlink channel bandwidth signaling indicates the downlink channel bandwidths supported on the carrier in carrier aggregation. For example, the carrier aggregation downlink channel bandwidth signaling indicates the downlink channel bandwidths supported on each carrier in carrier aggregation. For another example, there are N carriers for carrier aggregation, including carrier 1, carrier 2,... carrier N, where N is an integer greater than 1, then the carrier aggregation downlink channel bandwidth instruction indicates the downlink channel bandwidths of the UE on N carriers in carrier aggregation, or indicate the downlink channel bandwidth of the UE on a corresponding carrier or multiple corresponding carriers in carrier aggregation. Thus, in embodiments of the present disclosure, the UE can report the carrier aggregation downlink channel bandwidth signaling to indicate the downlink channel bandwidths supported by the UE on one or more carriers in carrier aggregation.

In embodiments of the present disclosure, the UE can report the third-type signaling, for example, report 0 or 1 or more of the carrier aggregation uplink channel bandwidth signaling and the carrier aggregation downlink channel bandwidth signaling, so that the base station can determine the combination of channel bandwidths supported by the UE in carrier aggregation based on one or more BCS value and the third-type signaling, or based on one or more BCS value, the first-type signaling and the third-type signaling, or based on one or more BCS value, the first-type signaling, the second-type signaling and the third-type signaling.

In addition, embodiments of the present disclosure can report the capabilities of different channel bandwidths for different UEs. For example, the third-type signaling that supports different channel bandwidths is reported for UE A and UE B, so that the base station only needs to measure the corresponding different supported channel bandwidth for different UEs, without the need to measure the whole combination of channel bandwidths for all UEs.

Thus, embodiments of the present disclosure can not only conveniently and efficiently report the capability of channel bandwidth of the UE, but also enable the base station to not need to measure the combination of all channel bandwidths for different UEs, thereby improving the measurement efficiency of the base station, saving measurement resources, and adapting to more application scenarios in which the capability of channel bandwidth of the UE is reported.

It should be noted that those skilled in the art can understand that the methods provided in the disclosed embodiments can be executed separately or together with some methods in the disclosed embodiments or related technologies.

It should be noted here that the following methods for UE capability processing are applied to a base station and are similar to the description of methods for UE capability processing applied to LTE mentioned above. For the technical details not disclosed in the embodiments of methods for UE capability processing applied to the base station in this disclosure, please refer to the description of the embodiments of methods for UE capability processing applied to UE in this disclosure. No detailed explanation will be provided here.

It should also be noted here that the following methods for UE capability processing can be applied to the base station, and can also be applied to the network side. The network side may have network side entities, which include logical entities or virtual entities.

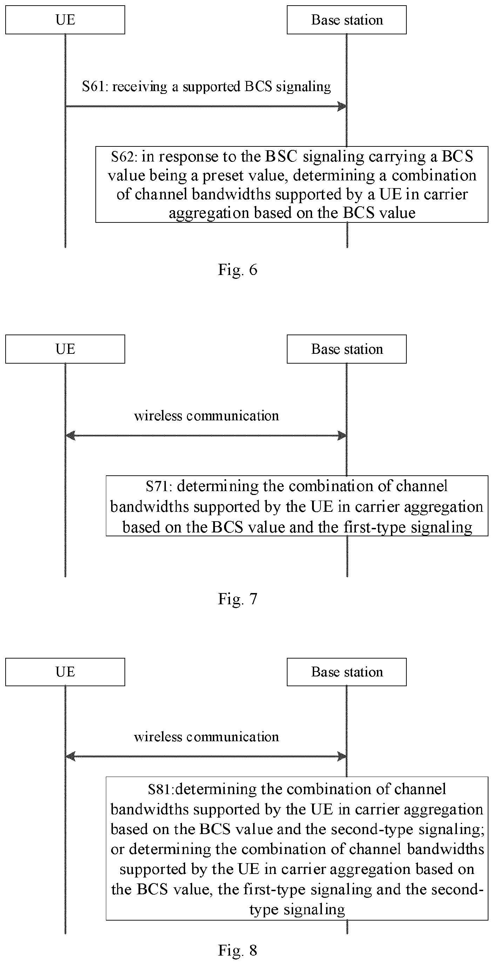

As shown in Fig. 6, embodiments of the present disclosure provide a method for UE capability processing. The method is applied to a base station, and includes:
Step S61, receiving a supported BCS signaling;
Step S62, in response to the BSC signaling carrying one or more BCS value each being a preset value, determining a combination of channel bandwidths supported by a UE in carrier aggregation based on one or more BCS value.

In an embodiment, step S61 may include receiving the BCS signaling sent by the UE.

In an embodiment, each BCS value is a preset value, and indicates the combination of channel bandwidths supported by the UE on respective carrier in non-carrier aggregation. Thus, in embodiments of the present disclosure, the base station determines the combination of channel bandwidths supported by the UE on each carrier in carrier aggregation in response to one or more BCS value carried as BCS4 in the BCS signaling.

In another embodiment, one or more BCS value is BCS4, which indicates the whole combination of channel bandwidths supported by the UE on each carrier in non-carrier aggregation. Thus, in embodiments of the present disclosure, the base station determines the whole combination of channel bandwidths supported by the UE on each carrier in carrier aggregation in response to one or more BCS value carried as BCS4 in the BCS signaling.

In embodiments of the present disclosure, when the base station receives the BCS signaling, if it is determined that the BCS value is a preset value carried in the BCS signaling, the base station can directly determine the combination of channel bandwidths supported by the UE in carrier aggregation based on the one or more BCS value. In this way, when introducing a new supported channel bandwidth into the existing combination of channel bandwidths supported in the carrier aggregation, it is not necessary to report the combination of channel bandwidths supported by the UE by creating a new BCS codebook. The combination of channel bandwidths supported by the UE can be directly reported by carrying one or more BCS value of a predetermined value in the existing BCS signaling. Thus, the UE's capability of the combination of supported channel bandwidths in carrier aggregation can be easily and efficiently obtained.

Moreover, in embodiments of the present disclosure, when different UEs, for example, UEs of different operators, need to report different channel bandwidths supported in non-carrier aggregation, by reporting the full set of channel bandwidths supported by the UE on each carrier in non-carrier aggregation, the capability of supported channel bandwidths of the UE can be further simply and efficiently reported, and can adapt to more application scenarios.

It should be noted that those skilled in the art can understand that the methods provided in the disclosed embodiments can be executed separately or together with some methods in the disclosed embodiments or related technologies.

The method for UE capability processing provided by embodiments of the present disclosure, applied to a base station, may include: obtaining a first-type signaling, wherein the first signaling indicates a channel bandwidth supported by the UE in non-carrier aggregation.

The method for UE capability processing provided by embodiments of the present disclosure may include: receiving the first-type signaling sent by the UE.

In some embodiments, the first-type signaling includes but is not limited to at least one of:
a channelBWs-UL signaling, indicating uplink channel bandwidths supported by the UE in non-carrier aggregation;
a channelBWs-DL signaling, indicating downlink channel bandwidths supported by the UE in non-carrier aggregation;
a channelBWs-UL-v1590 signaling, indicating that an uplink channel bandwidth supported by the UE in non-carrier aggregation is 70MHz;
a channelBWs-DL-v1590 signaling, indicating that a downlink channel bandwidth supported by the UE in non-carrier aggregation is 70MHz;
a channelBW-90mhz signaling, indicating that an uplink channel bandwidth and/or a downlink channel bandwidth supported by the UE in non-carrier aggregation is 90MHz;
a supportedBandwidthUL signaling, indicating a maximum uplink bandwidth supported by the UE in non-carrier aggregation;
a supportedBandwidthDL signaling, indicating a maximum downlink bandwidth supported by the UE in non-carrier aggregation.

In other embodiments, the first-type signaling includes but is not limited to at least one of:
a channelBWs-UL signaling, indicating uplink channel bandwidths supported by the UE on a carrier in non-carrier aggregation;
a channelBWs-DL signaling, indicating downlink channel bandwidthssupported by the UE on a carrier in non-carrier aggregation;
a channelBWs-UL-v1590 signaling, indicating that an uplink channel bandwidth supported by the UE on a carrier in non-carrier aggregation is 70MHz;
a channelBWs-DL-v1590 signaling, indicating that a downlink channel bandwidth supported by the UE on a carrier in non-carrier aggregation is 70MHz;
a channelBW-90mhz signaling, indicating that an uplink channel bandwidth and/or a downlink channel bandwidth supported by the UE on a carrier in non-carrier aggregation is 90MHz;
a supportedBandwidthUL signaling, indicating a maximum uplink bandwidth supported by the UE on a carrier in non-carrier aggregation or a maximum uplink bandwidth supported by the UE on the carrier in carrier aggregation;
a supportedBandwidthDL signaling, indicating a maximum downlink bandwidth supported by the UE on a carrier in non-carrier aggregation or a maximum downlink bandwidth supported by the UE on the carrier in carrier aggregation.

The method for UE capability processing provided by embodiments of the present disclosure, applied to a base station, may include but not limited to at least one of:
receiving the channelBWs-UL signaling reported by the UE;
receiving the channelBWs-DL signaling reported by the UE;
receiving the channelBWs-UL-v1590 signaling reported by the UE;
receiving the channelBWs-DL-v1590 signaling reported by the UE;
receiving the channelBW-90mhz signaling reported by the UE;
receiving the supportedBandwidthUL signaling reported by the UE;
receiving the supportedBandwidthDL signaling reported by the UE.

The method for UE capability processing provided by embodiments of the present disclosure, applied to a base station, may include but not limited to at least one of:
receiving the channelBWs-UL signaling reported by the UE in sub frequency bands;
receiving the channelBWs-DL signaling reported by the UE in sub frequency bands;
receiving the channelBWs-UL-v1590 signaling reported by the UE in sub frequency bands;
receiving the channelBWs-DL-v1590 signaling reported by the UE in sub frequency bands;
receiving the channelBW-90mhz signaling reported by the UE in sub frequency bands;
receiving the supportedBandwidthUL signaling reported by the UE in sub frequency bands;
receiving the supportedBandwidthDL signaling reported by the UE in sub frequency bands.

The method for UE capability processing provided by embodiments of the present disclosure, applied to a base station, may include: obtaining a second-type signaling, wherein the second-type signaling indicates a minimum channel bandwidth supported by the UE in carrier aggregation.

In an embodiment, obtaining the second-type signaling includes: obtaining the second-type signaling sent by the UE.

In some embodiments, the second-type signaling includes but is not limited to at least one of:

a supported minimum uplink bandwidth signaling, indicating a minimum uplink bandwidth supported by the UE in carrier aggregation;
a supported minimum downlink bandwidth signaling, indicating a minimum downlink bandwidth supported by the UE in carrier aggregation.

In other embodiments, the second-type signaling includes but is not limited to at least one of:
a supported minimum uplink bandwidth signaling, indicating a minimum uplink bandwidth supported by the UE on a carrier in carrier aggregation;
a supported minimum downlink bandwidth signaling, indicating a minimum downlink bandwidth supported by the UE on a carrier in carrier aggregation.

In an embodiment, the supported minimum uplink bandwidth signaling includes a supportedMinBandwidthUL signaling.

In an embodiment, the supported minimum downlink bandwidth signaling includes a supportedMinBandwidthDL signaling.

The method for UE capability processing provided by embodiments of the present disclosure may include but not limited to at least one of:
receiving the supported minimum uplink bandwidth signaling reported by the UE;
receiving the supported minimum downlink bandwidth signaling reported by the UE.

The method for UE capability processing provided by embodiments of the present disclosure may include but not limited to at least one of:
receiving the supported minimum uplink bandwidth signaling reported by the UE in sub frequency bands;
receiving the supported minimum downlink bandwidth signaling reported by the UE in sub frequency bands.

The method for UE capability processing provided by embodiments of the present disclosure, applied to a base station, may include: obtaining a third-type signaling, wherein the third-type signaling indicates a channel bandwidth supported by the UE in carrier aggregation.

In an embodiment, obtaining the third-type signaling includes: receiving the third-type signaling sent by the UE.

In some embodiments, the third-type signaling includes but is not limited to at least one of:
a carrier aggregation uplink channel bandwidth signaling, indicating an uplink channel bandwidth supported by the UE in carrier aggregation;
a carrier aggregation downlink channel bandwidth signaling, indicating a downlink channel bandwidth supported by the UE in carrier aggregation.

In other embodiments, the third-type signaling includes but is not limited to at least one of:
a carrier aggregation uplink channel bandwidth signaling, indicating uplink channel bandwidths supported by the UE on a carrier in carrier aggregation;
a carrier aggregation downlink channel bandwidth signaling, indicating downlink channel bandwidths supported by the UE on a carrier in carrier aggregation.

In an embodiment, the carrier aggregation uplink channel bandwidth signaling includes a channelBWs-UL-ca signaling.

In an embodiment, the carrier aggregation downlink channel bandwidth signaling includes a channelBWs-DL-ca signaling.

In embodiments of the present disclosure, one or more of the first-type signaling, the second-type signaling and the third-type signaling can be obtained, so that the base station can accurately determine the combination of channel bandwidths supported by the UE in carrier aggregation based on one or more BCS value as well as the first-type signaling and/or the second-type signaling and/or the third-type signaling. Moreover, the first-type signaling, the second-type signaling and/or the third-type signaling can be obtained in various ways, for example from the first-type signaling, the second-type signaling, and/or the third-type signaling sent by the UE, or from the first-type signaling, the second-type signaling, and/or the third-type signaling stored in the UE, which can be applied to more application scenarios that determine the UE's capability of supported channel bandwidths.

It should be noted that those skilled in the art can understand that the methods provided in the disclosed embodiments can be executed separately or together with some methods in the disclosed embodiments or related technologies.

As shown in Fig. 7, the method for UE capability processing provided by embodiments of the present disclosure is applied to a base station and includes:
Step S71, determining the combination of channel bandwidths supported by the UE in carrier aggregation based on one or more BCS value and the first-type signaling.

The method for UE capability processing provided by embodiments of the present disclosure may include: in response to the BCS signaling carrying one or more BCS value, determining the combination of channel bandwidths supported by the UE in carrier aggregation based on one or more BCS value and the first-type signaling.

The method for UE capability processing provided by embodiments of the present disclosure may include: in response to the BCS signaling carrying one or more BCS value being BCS4, determining the combination of channel bandwidths supported by the UE in carrier aggregation based on the first-type signaling.

In an embodiment, determining the combination of channel bandwidths supported by the UE in carrier aggregation based on the first-type signaling and one or more BCS value includes: determining the combination of channel bandwidths supported by the UE in carrier aggregation based on an intersection of a full set of channel bandwidths and the channel bandwidths supported by the UE indicated by the first-type signaling.

The union here refers to the combination of channel bandwidths that combine at least two channel bandwidths or channel bandwidth combinations together. For example, the first channel bandwidth combination is { 10MHz, 15MHz, 25MHz}, and the second channel bandwidth combination is {15MHz, 25MHz, 35MHz, 45MHz}, then the union of the first channel bandwidth combination and the second channel bandwidth combination is {10MHz, 15MHz, 25MHz, 35MHz, 45MHz}.

The intersection here refers to the combination of same channel bandwidths between at least two channel bandwidths or channel bandwidth combinations. For example, the first channel bandwidth combination is { 10MHz, 15MHz, 25MHz}, and the second channel bandwidth combination is {15MHz, 25MHz, 35MHz, 45MHz}; The intersection of the first channel bandwidth combination and the second channel bandwidth combination is {15MHz, 25MHz} .

In an embodiment, determining the combination of channel bandwidths supported by the UE in carrier aggregation includes: determining the combination of channel bandwidths supported by the UE in carrier aggregation based on the union of channel bandwidths supported by the UE indicated by each first-type signaling.

For example, the BCS signaling received by the base station is BCS4, and the first-type signaling received is channelBWs-UL-v1590 signaling. Then the base station determines that the uplink channel bandwidth supported by the UE in carrier aggregation is 70HMz. Since BCS4 is the full set of channel bandwidths, 70MHZ indicated by the channelBWs-UL-v1590 signaling is the uplink channel bandwidth supported by the UE in carrier aggregation.

For example, if the BCS signaling received by the base station is BCS4, and the first-type signaling received includes channelBWs-UL signaling and channelBWs-UL-v1590 signaling, the base station determines that the union of channel bandwidths supported by the UE indicated by the first-type signaling is a combination of channel bandwidths other than 70MHz. Since BCS4 is the full set of channel bandwidths, the base station determines that the uplink bandwidths supported by the UE in carrier aggregation are the intersection of the full set and the combination of channel bandwidths except 70MHz, that is, the uplink channel bandwidths supported by the UE in carrier aggregation are the combination of channel bandwidths except 70MHz.

In another embodiment, if the BCS value is a preset value, which indicates the combination of channel bandwidths supported by the UE in non-carrier aggregation; determining the combination of channel bandwidths supported by the UE in carrier aggregation based on one or more BCS value and the first-type signaling includes: determining the combination of channel bandwidths supported by the UE indicated by the first-type signaling based on a union of channel bandwidths supported by the UE indicated by each first-type signaling; determining the combination of channel bandwidths supported by the UE in carrier aggregation based on the intersection of the combination of channel bandwidths indicated by one or more BCS value and the combination of channel bandwidths supported by the UE indicated by the first-type signaling.

For example, the base station receives one or more BCS value of "11", which indicates that the UE supports the combination of channel bandwidths of {5MHz, 10MHz, 15MHz, 20MHz, 25MHz, 30MHz, 40MHz, 50MHz, 60MHz, 70MHz, 80MHz, 90MHz, 100MHz}, and receives the channelBWs-UL-v1590 signaling and channelBW-90mhz signaling. The base station determines that the uplink channel bandwidth combination supported by the UE indicated by the first-type signaling is {70MHz, 90MHz}, and then the base station determines that the channel bandwidth combination supported by the UE in carrier aggregation is the intersection {70MHz, 90MHz} of {5MHz, 10MHz, 15MHz, 20MHz, 25MHz, 30MHz, 40MHz, 50MHz, 60MHz, 70MHz, 80MHz, 90MHz, 100Mhz} and {70MHz, 90MHz}.

In one embodiment, if the channelBWs-UL signaling in the first-type signaling received by the base station is the default configuration, it is determined that the uplink channel bandwidth supported by the UE is the full set; and/or, if the channelBWs-DL signaling in the first-type signaling received by the base station is the default configuration, it is determined that the downlink channel bandwidth supported by the UE is the full set.

The method for UE capability processing provided by embodiments of the present disclosure may include: receiving the first-type signaling;
the above step S62 includes: determining the combination of channel bandwidths supported by the UE in carrier aggregation based on one or more BCS value and the first-type signaling.

In embodiments of the present disclosure, different combinations of channel bandwidths supported by different UEs in carrier aggregation can be determined through the first-type signaling and BCS value obtained by the base station. In this way, in embodiments of the disclosure, the UE does not need to create a new BCS codebook for reporting, which simplifies reporting the capability of channel bandwidths supported by the UE, and also enables the base station to accurately determine the combination of channel bandwidths supported by the UE in carrier aggregation, for different UEs, and adapts to more scenarios where the combination of channel bandwidths supported by the UE is determined.

It should be noted that those skilled in the art can understand that the methods provided in the disclosed embodiments can be executed separately or together with some methods in the disclosed embodiments or related technologies.

As shown in Fig. 8, the method for UE capability processing provided by embodiments of the present disclosure is applied to a base station and includes:
Step S81, determining the combination of channel bandwidths supported by the UE in carrier aggregation based on one or more BCS value and the second-type signaling, or determining the combination of channel bandwidths supported by the UE in carrier aggregation based on one or more BCS value, the first-type signaling and the second-type signaling.

The method for UE capability processing provided by embodiments of the present disclosure may include: determining the combination of channel bandwidths supported by the UE in carrier aggregation based on one or more BCS value and the channel bandwidth supported by the UE indicated by the first-type signaling.

The method for UE capability processing provided by embodiments of the present disclosure may include: determining the combination of channel bandwidths supported by the UE in carrier aggregation based on one or more BCS value and the intersection of channel bandwidths supported by the UE indicated by the first-type signaling and channel bandwidths supported by the UE indicated by the second-type signaling.

The method for UE capability processing provided by embodiments of the present disclosure may include: in response to the BCS signaling carrying one or more BCS value of BCS4, determining the combination of channel bandwidths supported by the UE in carrier aggregation based on channel bandwidths supported by the UE indicated by the first-type signaling.

The method for UE capability processing provided by embodiments of the present disclosure may include: in response to the BCS signaling carrying one or more BCS value of BCS4, determining the combination of channel bandwidths supported by the UE in carrier aggregation based on the intersection of channel bandwidths supported by the UE indicated by the first-type signaling and channel bandwidths supported by the UE indicated by the second-type signaling.

In an embodiment, the base station determines the combination of channel bandwidths supported by the UE indicated by the first-type signaling based on the union of the channel bandwidths supported by the UE indicated by each first-type signaling, and determines the combination of channel bandwidths supported by the UE in carrier aggregation based on the intersection of the combination of channel bandwidths supported by the UE indicated by the first-type signaling and the channel bandwidth supported by the UE indicated by the second-type signaling.

For example, the BCS signaling received by the base station is BCS4, and the second-type signaling received is supportedMinBandwidthUL signaling, in which the supportedMinBandwidthUL signaling indicates that the minimum uplink bandwidth supported by the UE in carrier aggregation is 50MHz. The base station determines that the uplink bandwidths supported by the UE in carrier aggregation are channel bandwidths greater than or equal to 50MHz. Since BCS4 is the full set of channel bandwidths, the combination of uplink channel bandwidths supported by the UE in carrier aggregation is the uplink channel bandwidth supported by the UE indicated by the supportedMinBandwidthUL signaling.

For example, the BCS signaling received by the base station is BCS4, the first-type signaling received is supportedBandwidthUL signaling, and the second-type signaling received is supportedMinBandwidthUL signaling, in which the supportedBandwidthUL signaling indicates that the maximum uplink bandwidth supported by the UE in carrier aggregation is 100MHz, and the supportedMinBandwidthUL signaling indicates that the minimum uplink bandwidth supported by the UE in Carrier aggregation is 50MHz. The base station determines that the uplink bandwidths supported by the UE in carrier aggregation are channel bandwidths greater than or equal to 50MHz and less than or equal to 100MHz. Since BCS4 is the full set of channel bandwidths, the combination of uplink channel bandwidths supported by the UE in carrier aggregation is the intersection of the uplink channel bandwidths supported by the UE indicated by the supportedBandwidthUL signaling and the uplink channel bandwidths supported by the UE indicated by the supportedMinBandwidthUL signaling.

For example, the BCS signaling received by the base station is BCS4, the first-type signaling received includes supportedBandwidthUL signaling and channelBWs-UL-v1590 signaling, and the second-type signaling received is supportedMinBandwidthUL signaling, in which, the supportedBandwidthUL signaling indicates that the maximum uplink bandwidth supported by the UE in carrier aggregation is 100MHz, and the supportedMinBandwidthUL signaling indicates that the minimum uplink bandwidth supported by the UE in carrier aggregation is 50MHz. The base station determines that the channel bandwidth combination supported by UE indicated by the first-type signaling is the union of supportedBandwidthUL signaling and channelBWs-UL-v1590 signaling, i.e., includes the bandwidths less than or equal to 100MHZ, and then determines that the intersection of the first-type signaling and the second-type signaling includes bandwidths greater than or equal to 50MHz and less than or equal to 100MHz. Then the base station determines that the uplink bandwidths supported by the UE in Carrier aggregation are bandwidths greater than or equal to 50MHz and less than or equal to 100MHz.

Of course, in other embodiments, if the BCS value is not BCS4, but other preset values, which indicates the combination of channel bandwidths supported in non-carrier aggregation, the combination of channel bandwidths supported by the UE in carrier aggregation may also be determined based on the intersection of the union of various first-type signaling, and the combination of channel bandwidths indicated by one or more BCS value and the channel bandwidth indicated by the second-type signaling.

The method for UE capability processing provided by embodiments of the present disclosure, applied to a base station, may include:
obtaining a second-type signaling, wherein the second-type signaling indicates a minimum channel bandwidth supported by the UE in carrier aggregation.

The above step S62 includes one of:
determining the combination of channel bandwidths supported by the UE in carrier aggregation based on one or more BCS value and the second-type signaling;
determining the combination of channel bandwidths supported by the UE in carrier aggregation based on one or more BCS value, the first-type signaling and the second-type signaling.

In embodiments of the present disclosure, different combinations of channel bandwidths supported by different UEs in carrier aggregation can be determined through one or more BCS value and the second-type signaling received by the base station. In this way, in embodiments of the disclosure, the UE does not need to create a new BCS codebook for reporting, which simplifies reporting the capability of channel bandwidths supported by the UE, and also enables the base station to accurately determine the combination of channel bandwidths supported by the UE in carrier aggregation, for different UEs, and adapts to more scenarios where the combination of channel bandwidths supported by the UE is determined.

The method for UE capability processing provided by embodiments of the present disclosure, applied to a base station, may include:
obtaining the first-type signaling in different sub frequency bands;
obtaining the second-type signaling in different sub frequency bands;
obtaining a combination of channel bands supported by the UE in a sub frequency band based on the intersection of channel bands supported by the UE indicated by the first-type signaling in the sub frequency band and channel bands supported by the UE indicated by the second-type signaling in the sub frequency band;
determining the combination of channel bandwidths supported by the UE in carrier aggregation based on the union of combinations of channel bandwidths supported by the UE in respective sub frequency bands.

In embodiments of the present disclosure, the base station can also receive the first-type signaling and the second-type signaling reported by the UE in different sub frequency bands. On the one hand, the combinations of channel bandwidths supported by the UE in different frequency bands in carrier aggregation can be determined based on the first-type signaling and the second-type signaling, and on the other hand, the combination of channel bandwidths supported by the UE in carrier aggregation can be determined based on the combinations of channel bandwidths supported in respective sub frequency bands.

It should be noted that those skilled in the art can understand that the methods provided in the disclosed embodiments can be executed separately or together with some methods in the disclosed embodiments or related technologies.

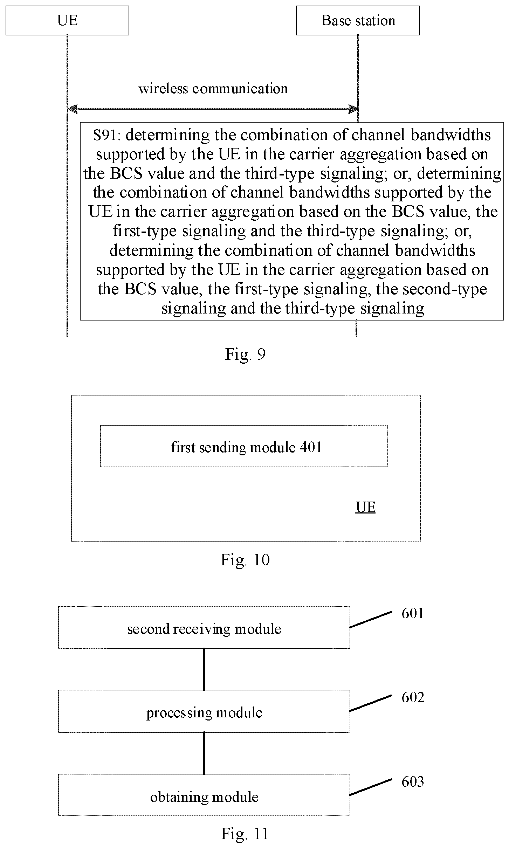

As shown in Fig. 9, embodiments of the present disclosure a method for UE capability processing. The method is applied to a base station, and includes:
Step S91, determining the combination of channel bandwidths supported by the UE in carrier aggregation based on one or more BCS value and the third-type signaling; or, determining the combination of channel bandwidths supported by the UE in carrier aggregation based on one or more BCS value, the first-type signaling and the third-type signaling; or, determining the combination of channel bandwidths supported by the UE in carrier aggregation based on one or more BCS value, the first-type signaling, the second-type signaling and the third-type signaling.

The method for UE capability processing provided by embodiments of the present disclosure may include: determining the combination of channel bandwidths supported by the UE in carrier aggregation based on one or more BCS value, and the intersection of channel bandwidths supported by the UE indicated by the first-type signaling and channel bandwidths supported by the UE indicated by the third-type signaling.

The method for UE capability processing provided by embodiments of the present disclosure may include: determining the combination of channel bandwidths supported by the UE in carrier aggregation based on one or more BCS value, and the intersection of channel bandwidths supported by the UE indicated by the first-type signaling and channel bandwidths supported by the UE indicated by the third-type signaling.

The method for UE capability processing provided by embodiments of the present disclosure may include: determining the combination of channel bandwidths supported by the UE in carrier aggregation based on one or more BCS value, and the intersection of channel bandwidths supported by the UE indicated by the first-type signaling, channel bandwidths supported by the UE indicated by the second-type signaling and channel bandwidths supported by the UE indicated by the third-type signaling.

The method for UE capability processing provided by embodiments of the present disclosure may include: in response to the BCS signaling carrying one or more BCS value of BCS4, determining the combination of channel bandwidths supported by the UE in carrier aggregation based on the intersection of channel bandwidths supported by the UE indicated by the first-type signaling and channel bandwidths supported by the UE indicated by the second-type signaling.

The method for UE capability processing provided by embodiments of the present disclosure may include: in response to the BCS signaling carrying one or more BCS value of BCS4, determining the combination of channel bandwidths supported by the UE in carrier aggregation based on the intersection of channel bandwidths supported by the UE indicated by the first-type signaling, channel bandwidths supported by the UE indicated by the second-type signaling and channel bandwidths supported by the UE indicated by the third-type signaling.

The method for UE capability processing provided by embodiments of the present disclosure may include: in response to the BCS signaling carrying one or more BCS value of BCS4, determining the combination of channel bandwidths supported by the UE in carrier aggregation based on the intersection of channel bandwidths supported by the UE indicated by the second-type signaling and channel bandwidths supported by the UE indicated by the third-type signaling.

The method for UE capability processing provided by embodiments of the present disclosure may include: in response to the BCS signaling carrying one or more BCS value of BCS4, determining the combination of channel bandwidths supported by the UE in carrier aggregation based on the intersection of channel bandwidths supported by the UE indicated by the first-type signaling, channel bandwidths supported by the UE indicated by the second-type signaling and channel bandwidths supported by the UE indicated by the third-type signaling.

In an embodiment, the base station determines the combination of channel bandwidths supported by the UE indicated by the first-type signaling based on the union of channel bandwidths supported by the UE indicated by various first-type signaling, and determines the combination of channel bandwidths supported by the UE in carrier aggregation based on the intersection of the combination of channel bandwidths supported by the UE indicated by the first-type signaling, and the channel bandwidths supported by the UE indicated by the third-type signaling.

In another embodiment, the base station determines the combination of channel bandwidths supported by the UE indicated by the first-type signaling based on the union of channel bandwidths supported by the UE indicated by various first-type signaling, and determines the combination of channel bandwidths supported by the UE in carrier aggregation based on the intersection of the combination of channel bandwidths supported by the UE indicated by the first-type signaling, the channel bandwidths supported by the UE indicated by the second-type signaling, and the channel bandwidths supported by the UE indicated by the third-type signaling.

For example, the BCS signaling received by the base station is BCS4, the first-type - signaling received is supportedBandwidthUL signaling, and the third-type signaling received is channelBWs-UL-ca signaling, in which the supportedBandwidthUL signaling indicates that the maximum uplink bandwidth supported by the UE in carrier aggregation is 100MHz. The base station determines that the uplink channel bandwidths supported by the UE in carrier aggregation are bandwidths less than or equal to 100MHz. Since BCS4 is the full set of channel bandwidths, it is determined that the uplink channel bandwidths supported by the UE in carrier aggregation are the intersection of channel bandwidths indicated by the channelBWs-UL-ca signaling and channel bandwidths indicated by the supportedBandwidthUL signaling, that is, the bandwidths less than or equal to 100MHz.

For example, the BCS signaling received by the base station is BCS4, the first-type - signaling received is supportedBandwidthUL signaling, the second-type signaling received is supportedMinBandwidthUL signaling, and the third-type signaling received is channelBWs-UL-ca signaling, in which the supportedBandwidthUL signaling indicates that the maximum uplink bandwidth supported by the UE in carrier aggregation is 100MHz, and the supportedMinBandwidthUL signaling indicates that the minimum uplink bandwidth supported by the UE in carrier aggregation is 50MHz. The base station determines that the uplink channel bandwidths supported by UE in carrier aggregation are bandwidths greater than or equal to 50MHz and less than or equal to 100MHz. Since BCS4 is the full set of channel bandwidths, it is determined that the uplink channel bandwidths supported by the UE in carrier aggregation are the intersection of channel bandwidths indicated by the supportedBandwidthUL signaling, supportedMinBandwidthUL signaling and channelBWs-UL-ca signaling, that is, the bandwidths greater than or equal to 50MHz and less than or equal to 100MHz.

For example, the BCS signaling received by the base station is BCS4, the first-type signaling received includes channelBW-90mhz signaling and supportedBandwidthUL signaling, the second-type signaling received is supportedMinBandwidthUL signaling, and the third-type signaling received is channelBWs-UL-ca signaling, in which the supportedBandwidthUL signaling indicates that the maximum uplink bandwidth supported by the UE in carrier aggregation is 80MHz, and the supportedMinBandwidthUL signaling indicates that the minimum uplink bandwidth supported by the UE in carrier aggregation is 50MHz. Then the base station determines that the channel bandwidth combination indicated by the first-type signaling is the union of channel bandwidths indicated by the channelBW-90mhz signaling and supportedBandwidthUL signaling, that is, bandwidths less than or equal to 80MHz and bandwidth being 90MHz. Since BCS4 is the full set of channel bandwidths, it is determined that the uplink channel bandwidths supported by the UE in carrier aggregation are the intersection of bandwidths indicated by the first-type signaling, the second-type signaling and the third-type signaling, that is, bandwidths greater than or equal to 50MHz and less than or equal to 80MHz and bandwidth being 90MHz.

Of course, in other embodiments, if the BCS value is not BCS4 but other preset values to indicate the combination of channel bandwidths supported by the UE in non-carrier aggregation, the base station can determine the combination of channel bandwidths supported by UE in carrier aggregation based on the combination of channel bandwidths supported by the UE indicated by one or more BCS value, and the intersection of channel bandwidths supported by UE indicated by the first-type -signaling and channel bandwidths supported by the UE indicated by the third-type signaling. Alternatively, the base station can determine the combination of channel bandwidths supported by the UE in carrier aggregation based on the combination of channel bandwidths supported by the UE indicated by one or more BCS value, the channel bandwidths supported by the UE indicated by the first-type signaling, and the intersection of channel bandwidths supported by the UE indicated by the second-type signaling and the third-type signaling. Exemplary examples will not be repeated here.

The method for UE capability processing provided by embodiments of the present disclosure may include:
obtaining a third-type signaling, wherein the third-type signaling indicates channel bandwidths supported by the UE in carrier aggregation.

The above step S62 includes one of:
determining the combination of channel bandwidths supported by the UE in carrier aggregation based on one or more BCS value and the third-type signaling;
determining the combination of channel bandwidths supported by the UE in carrier aggregation based on one or more BCS value, the first-type signaling and the third-type signaling;
determining the combination of channel bandwidths supported by the UE in carrier aggregation based on one or more BCS value, the first-type signaling, the second-type signaling and the third-type signaling.

In an embodiment, the above step S91 of determining the combination of channel bandwidths based on one or more BCS value, the first-type signaling and the third-type signaling includes:

in response to default configuration of the carrier aggregation uplink channel bandwidth signaling and carrier aggregation downlink channel bandwidth signaling in the third-type signaling, determining the combination of channel bandwidths supported by the UE in carrier aggregation based on the BC value and the first-type signaling.

In an embodiment, the above step S91 of determining the combination of channel bandwidths based on one or more BCS value, the first-type signaling and the third-type signaling includes:

in response to default configuration of the carrier aggregation uplink channel bandwidth signaling and carrier aggregation downlink channel bandwidth signaling in the third-type signaling, determining the combination of channel bandwidths supported by the UE in carrier aggregation based on the BC value, the first-type signaling and the second-type signaling.

Thus, in embodiments of the present disclosure, if the uplink channel bandwidth signaling is configured by default, it is determined that the third-type signaling indicates that the UE supports all combinations of uplink channel bandwidths on each carrier in carrier aggregation; and/or, if the downlink channel bandwidth signaling is configured by default, it is determined that the third-type signaling indicates that the UE supports all combinations of downlink channel bandwidths on each carrier in carrier aggregation.

In embodiments of the present disclosure, different combinations of channel bandwidths supported by different UEs in carrier aggregation can be determined by the third-type signaling and one or more BCS value obtained by the base station, or the third-type signaling, the first-type signaling and one or more BCS value obtained by the base station, or the third-type signaling, the first-type signaling, the second-type signaling and one or more BCS value obtained by the base station. In this way, in embodiments of the present disclosure, the UE does not need to create a new BCS codebook for reporting, which simplifies reporting the capability of channel bandwidths supported by the UE, and also enables the base station to accurately determine the combination of channel bandwidths supported by the UE in carrier aggregation, for different UEs, and adapts to more scenarios where the combination of channel bandwidths supported by the UE is determined.

It should be noted that, in any embodiment of the present disclosure, the combination of channel bandwidths supported by UE in carrier aggregation may be: the combination of channel bandwidths of the UE on a certain carrier or multiple carriers in carrier aggregation, or the combination of channel bandwidths of the UE on each carrier in carrier aggregation.

It should be noted that those skilled in the art can understand that the methods provided in the disclosed embodiments can be executed separately or together with some methods in the disclosed embodiments or related technologies.

As shown in Fig. 10, embodiments of the present disclosure provide an apparatus for UE capability processing. The apparatus is applied to a UE, and includes:
a first sending module 401, configured to report a supported BCS signaling, wherein the BCS signaling carries one or more BCS value, wherein each BCS value is a preset value, and used for a base station to determine a combination of channel bandwidths supported by a UE in carrier aggregation.

The apparatus for UE capability processing provided by embodiments of the present disclosure may include a first sending module configured to report a first-type signaling, wherein the first-type signaling indicates channel bandwidths supported by the UE in non-carrier aggregation, wherein the first-type signaling and one or more BCS value are jointly used for the base station to determine the combination of channel bandwidths supported by the UE in carrier aggregation.

In some embodiments, the first-type signaling includes at least one of:
a channelBWs-UL signaling, indicating uplink channel bandwidths supported by the UE in the non-carrier aggregation; and
a channelBWs-DL signaling, indicating downlink channel bandwidths supported by the UE in the non-carrier aggregation.

In some embodiments, the first-type signaling includes at least one of:
a channelBWs-UL-v1590 signaling, indicating that an uplink channel bandwidth supported by the UE in the non-carrier aggregation is 70MHz;
a channelBWs-DL-v1590 signaling, indicating that a downlink channel bandwidth supported by the UE in the non-carrier aggregation is 70MHz;
a channelBW-90mhz signaling, indicating that an uplink channel bandwidth and/or a downlink channel bandwidth supported by the UE in the non-carrier aggregation is 90MHz.

In some embodiments, the first-type signaling includes at least one of:
a supportedBandwidthUL signaling, indicating a maximum uplink bandwidth supported by the UE in the non-carrier aggregation or indicate a maximum uplink bandwidth supported by the UE in the carrier aggregation;
a supportedBandwidthDL signaling, indicating a maximum downlink bandwidth supported by the UE in the non-carrier aggregation or indicate a maximum downlink bandwidth supported by the UE in the carrier aggregation.

The apparatus for UE capability processing provided by embodiments of the present disclosure may include a first sending module configured to report a second-type signaling, wherein the second-type signaling indicates a minimum channel bandwidth supported by the UE in the carrier aggregation, wherein the second-type signaling and one or more BCS value are jointly used for the base station to determine the combination of channel bandwidths supported by the UE in the carrier aggregation; or the second-type signaling, one or more BCS value and the first-type signaling are jointly used for the base station to determine the combination of channel bandwidths supported by the UE in the carrier aggregation.

In some embodiments, the second-type signaling includes at least one of:
a supported minimum uplink bandwidth signaling, indicating a minimum uplink bandwidth supported by the UE in the carrier aggregation;
a supported minimum downlink bandwidth signaling, indicating a minimum downlink bandwidth supported by the UE in the carrier aggregation.

In some embodiment, the apparatus includes:
reporting a third-type signaling, wherein the third-type signaling indicates channel bandwidths supported by the UE in the carrier aggregation;
wherein the third-type signaling and one or more BCS value are jointly used for the base station to determine the combination of channel bandwidths supported by the UE in the carrier aggregation; or the third-type signaling, one or more BCS value and the first-type signaling are jointly used for the base station to determine the combination of channel bandwidths supported by the UE in the carrier aggregation; or the third-type signaling, one or more BCS value, the first-type signaling and the second-type signaling are jointly used for the base station to determine the combination of channel bandwidths supported by the UE in the carrier aggregation.

In some embodiments, the third-type signaling includes at least one of:
a carrier aggregation uplink channel bandwidth signaling, indicating uplink channel bandwidths supported by the UE in the carrier aggregation;
a carrier aggregation downlink channel bandwidth signaling, indicating downlink channel bandwidths supported by the UE in the carrier aggregation.

It should be noted that those skilled in the art can understand that the apparatuses provided in the disclosed embodiments can be executed separately or together with some apparatuses in the disclosed embodiments or related technologies.

As shown in Fig. 11, embodiments of the present disclosure provide an apparatus for UE capability processing. The apparatus is applied to a base station, and includes:
a second receiving module 601, configured to receive a supported bandwidth combination set (BCS) signaling;
a processing module 602, configured to, in response to the BSC signaling carrying one or more BCS value each being a preset value, determine a combination of channel bandwidths supported by a UE in carrier aggregation based on one or more BCS value.

The apparatus for UE capability processing provided by embodiments of the present disclosure may include:
an obtaining module 603, configured to obtain a first-type signaling, wherein the first-type signaling indicates channel bandwidths supported by the UE in non-carrier aggregation.

The processing module 602 is configured to determine the combination of channel bandwidths supported by the UE in carrier aggregation based on one or more BCS value and the first-type signaling.

In some embodiments, the first-type signaling includes at least one of:
a channelBWs-UL signaling, indicating uplink channel bandwidths supported by the UE in the non-carrier aggregation; and
a channelBWs-DL signaling, indicating downlink channel bandwidths supported by the UE in the non-carrier aggregation.

In some embodiments, the first-type signaling includes at least one of:
a channelBWs-UL-v1590 signaling, indicating that an uplink channel bandwidth supported by the UE in the non-carrier aggregation is 70MHz;
a channelBWs-DL-v1590 signaling, indicating that a downlink channel bandwidth supported by the UE in the non-carrier aggregation is 70MHz;
a channelBW-90mhz signaling, indicating that an uplink channel bandwidth and/or a downlink channel bandwidth supported by the UE in the non-carrier aggregation is 90MHz.

In some embodiments, the first-type signaling includes at least one of:
a supportedBandwidthUL signaling, indicating a maximum uplink bandwidth supported by the UE in the non-carrier aggregation or indicate a maximum uplink bandwidth supported by the UE in the carrier aggregation;
a supportedBandwidthDL signaling, indicating a maximum downlink bandwidth supported by the UE in the non-carrier aggregation or indicate a maximum downlink bandwidth supported by the UE in the carrier aggregation.

The apparatus for UE capability processing provided by embodiments of the present disclosure may include:
an obtaining module 603, configured to obtain a second-type signaling, wherein the second-type signaling indicates a minimum channel bandwidth supported by the UE in the carrier aggregation;
a processing module 603, configured to: determine the combination of channel bandwidths supported by the UE in carrier aggregation based on one or more BCS value and the second-type signaling; determine the combination of channel bandwidths supported by the UE in carrier aggregation based on one or more BCS value, the first-type signaling and the second-type signaling.

In some embodiments, the second-type signaling includes at least one of:
a supported minimum uplink bandwidth signaling, indicating a minimum uplink bandwidth supported by the UE in the carrier aggregation;
a supported minimum downlink bandwidth signaling, indicating a minimum downlink bandwidth supported by the UE in the carrier aggregation.

The apparatus for UE capability processing provided by embodiments of the present disclosure may include: a processing module 602, configured to determine the combination of channel bandwidths supported by the UE in carrier aggregation based on one or more BCS value and channel bandwidths supported by the UE indicated by the second-type signaling.

The apparatus for UE capability processing provided by embodiments of the present disclosure may include: a processing module 602, configured to determine the combination of channel bandwidths supported by the UE in carrier aggregation based on one or more BCS value and an intersection of channel bandwidths supported by the UE indicated by the first-type signaling and channel bandwidths supported by the UE indicated by the second-type signaling.

The apparatus for UE capability processing provided by embodiments of the present disclosure may include:
an obtaining module 603, configured to obtain the first-type signaling in different sub frequency bands; and obtain the second-type signaling in different sub frequency bands;
a processing module 602, configured to determine a combination of channel bandwidths supported by the UE in a sub frequency band based on an intersection of channel bandwidths supported by the UE indicated by the first-type signaling for the sub frequency band and channel bandwidths supported by the UE indicated by the second-type signaling for the sub frequency band; and determine the combination of channel bandwidths supported by the UE in carrier aggregation based on a union of combinations of channel bandwidths supported by the UE in respective sub frequency bands.

The apparatus for UE capability processing provided by embodiments of the present disclosure may include:
an obtaining module 603, configured to obtain a third-type signaling, wherein the third-type signaling indicates channel bandwidths supported by the UE in the carrier aggregation;
a processing module 602, configured to perform one of:
   determining the combination of channel bandwidths supported by the UE in the carrier aggregation based on one or more BCS value and the third-type signaling;
   determining the combination of channel bandwidths supported by the UE in the carrier aggregation based on one or more BCS value, the first-type signaling and the third-type signaling;
   determining the combination of channel bandwidths supported by the UE in the carrier aggregation based on one or more BCS value, the first-type signaling, the second-type signaling and the third-type signaling.

In some embodiments, the third-type signaling includes at least one of:
a carrier aggregation uplink channel bandwidth signaling, indicating uplink channel bandwidths supported by the UE in the carrier aggregation;
a carrier aggregation downlink channel bandwidth signaling, indicating downlink channel bandwidths supported by the UE in the carrier aggregation.

The apparatus for UE capability processing provided by embodiments of the present disclosure may include: a processing module 602, configured to determine the combination of channel bandwidths supported by the UE in the carrier aggregation based on one or more BCS value, an intersection of channel bandwidths supported by the UE indicated by the first-type signaling and channel bandwidths supported by the UE indicated by the third-type signaling.

The apparatus for UE capability processing provided by embodiments of the present disclosure may include: a processing module 602, configured to determine the combination of channel bandwidths supported by the UE in the carrier aggregation based on one or more BCS value, an intersection of channel bandwidths supported by the UE indicated by the first-type signaling, channel bandwidths supported by the UE indicated by the second-type signaling and channel bandwidths supported by the UE indicated by the third-type signaling.

The apparatus for UE capability processing provided by embodiments of the present disclosure may include: a processing module 602, configured to, in response to default configuration of the carrier aggregation uplink channel bandwidth signaling and the carrier aggregation downlink channel bandwidth signaling in the third-type signaling, determine the combination of channel bandwidths supported by the UE in the carrier aggregation based on one or more BCS value and the first-type signaling.

The apparatus for UE capability processing provided by embodiments of the present disclosure may include: a processing module 602, configured to, in response to default configuration of the carrier aggregation uplink channel bandwidth signaling and the carrier aggregation downlink channel bandwidth signaling in the third-type signaling, determine the combination of channel bandwidths supported by the UE in the carrier aggregation based on one or more BCS value, the first-type signaling and the second signaling.

It should be noted that those skilled in the art can understand that the apparatuses provided in the disclosed embodiments can be executed separately or together with some apparatuses in the disclosed embodiments or related technologies.

Regarding the apparatuses in the above embodiments, the specific ways in which each module performs operations have been described in detail in the embodiments related to the method, and will not be explained in detail here.

Embodiments of the present disclosure provide a communication device, including:
a processor; and
a memory configured to store instructions executable by the processor,
wherein the processor is configured to implement the method for UE capability processing in any embodiment of the present disclosure, when running the executable instructions.

The communication device here may be a UE, a base station, or a network side entity.

The processor may include various types of storage media, which are non-temporary computer storage media that can continue to remember and store information on the user device after power failure.

The processor may be connected to the memory through a bus or other means for reading the executable program stored on the memory, for example, at least one of the methods shown in Figs. 2 to 9.

Embodiments of the present disclosure further provide a computer storage medium. The computer storage medium is stored with a computer executable program. When the executable program is executed by a processor, the method for UE capability processing in any embodiment of the present disclosure, for example, at least one of the methods shown in Figs. 2 to 9, is implemented.

Regarding the device or storage medium in the above embodiments, the specific ways in which each module performs operations have been described in detail in the embodiments related to the method, and will not be explained in detail here.

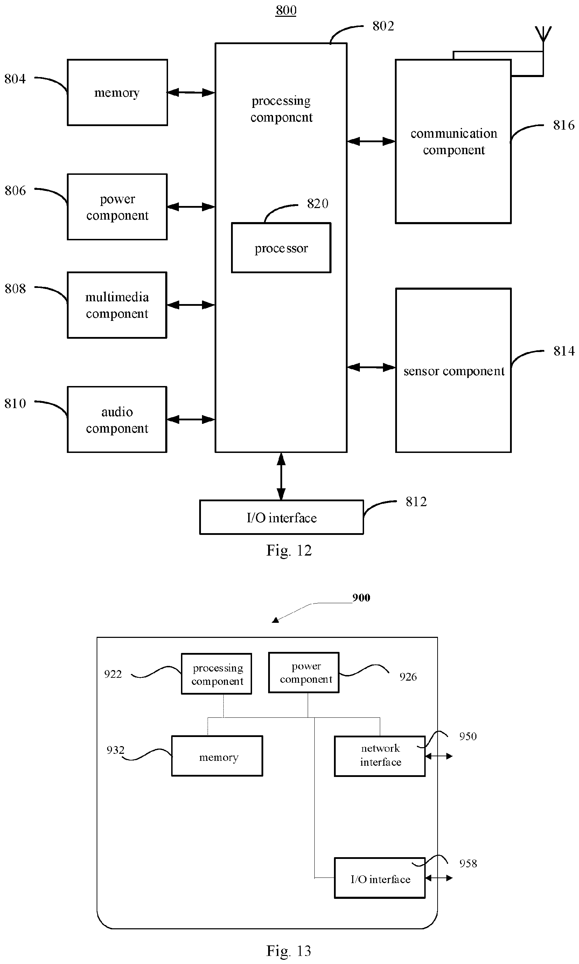

Fig. 12 is a schematic block diagram of a user equipment (UE) 800 according to an embodiment of the present disclosure. For example, the UE 800 may be a mobile phone, a computer, a digital broadcasting terminal, a message transceiver device, a game console, a tablet device, a medical device, a fitness device, a personal digital assistant, etc.

Referring to Fig. 12, the UE 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the UE 800, such as the operations associated with display, telephone calls, data communications, camera operations, and recording operations. The processing component 802 may include one or more processors 820 to execute instructions to perform all or part of the steps in the above-described HARQ-ACK feedback methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the UE 800. Examples of such data include instructions for any applications or methods operated on the UE 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the UE 800. The power component 806 may include a power management system, one or more power sources, and any other components associated with the generation, management, and distribution of power in the UE 800.

The multimedia component 808 includes a screen providing an output interface between the UE 800 and the user. In some embodiments, the screen may include a liquid crystal display (LCD) and a touch panel (TP). If the screen includes a touch panel, the screen can be implemented as a touch screen to receive input signals from the user. The touch panel includes one or more touch sensors to sense touch, sliding, and gestures on the touch panel. The touch sensor can not only sense the boundaries of touch or sliding actions, but also detect the duration and pressure related to the touch or sliding operation. In some embodiments, the multimedia component 808 includes a front camera and/or a rear camera. The front camera and the rear camera may receive an external multimedia datum while the UE 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the UE 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the UE 800. For instance, the sensor component 814 may detect an open/closed status of the UE 800, relative positioning of components, e.g., the display and the keypad, of the UE 800, a change in position of the UE 800 or a component of the UE 800, a presence or absence of user contact with the UE 800, an orientation or an acceleration/deceleration of the UE 800, and a change in temperature of the UE 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the UE 800 and other devices. The UE 800 can access a wireless network based on a communication standard, such as WiFi, second generation (2G), third generation (3G), fourth generation (4G), fifth generation (5G) or sixth generation (6G), or a combination thereof. In one some embodiment, the communication component 816 receives a broadcast signal or broadcast associated information from an external broadcast management system via a broadcast channel. In one some embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In some embodiments, the UE 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In some embodiments, there is also provided a non-transitory computer readable storage medium including instructions, such as included in the memory 804, executable by the processor 820 in the UE 800, for performing the above-described HARQ-ACK feedback methods. For example, the non-transitory computer-readable storage medium may be a ROM, a RAM, a CD-ROM, a magnetic tape, a floppy disc, an optical data storage device, and the like.

As shown in Fig. 13, embodiments of the present disclosure illustrate the structure of a base station. For example, the base station 900 may be provided as a network side device. Referring to Fig. 13, the base station 900 includes a processing component 922, which further includes one or more processors, as well as memory resources represented by the memory 932, for storing instructions that can be executed by the processing component 922, such as application programs. The application programs stored in the memory 932 may include one or more modules each corresponding to a set of instructions. In addition, the processing component 922 is configured to execute instructions to execute any of the aforementioned methods applied to the base station, such as the methods shown in Figs. 4 to 10.

The base station 900 may also include a power component 926 configured to perform power management of the base station 900, a wired or wireless network interface 950 configured to connect the base station 900 to the network, and an input/output (I/O) interface 958. The base station 900 can operate based on operating systems stored in the memory 932, such as Windows Server TM, Mac OS XTM, UnixTM, LinuxTM, FreeBSDTM, or similar.

Other embodiments of the disclosure will be apparent to those skilled in the art from consideration of the specification and practice of the disclosure disclosed herein. This disclosure is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method for user equipment (UE) capability processing, applied to a UE, comprising:
reporting a supported bandwidth combination set (BCS) signaling, wherein the BCS signaling carries one or more BCS value, wherein each BCS value is a preset value, and used for a base station to determine a combination of channel bandwidths supported by a UE in carrier aggregation.

2. The method of claim 1, comprising:
reporting a first-type signaling, wherein the first-type signaling indicates channel bandwidths supported by the UE in non-carrier aggregation, wherein the first-type signaling and the one or more BCS value are jointly used for the base station to determine the combination of channel bandwidths supported by the UE in carrier aggregation.

3. The method of claim 2, wherein the first-type signaling comprises at least one of:
a channelBWs-UL signaling, indicating uplink channel bandwidths supported by the UE in the non-carrier aggregation; or
a channelBWs-DL signaling, indicating downlink channel bandwidths supported by the UE in the non-carrier aggregation.

4. The method of claim 2 or 3, wherein the first-type signaling comprises at least one of:
a channelBWs-UL-v1590 signaling, indicating that an uplink channel bandwidth supported by the UE in the non-carrier aggregation is 70MHz;
a channelBWs-DL-v1590 signaling, indicating that a downlink channel bandwidth supported by the UE in the non-carrier aggregation is 70MHz; or
a channelBW-90mhz signaling, indicating that an uplink channel bandwidth and/or a downlink channel bandwidth supported by the UE in the non-carrier aggregation is 90MHz.

5. The method of any of claims 2-4, wherein the first-type signaling comprises at least one of:
a supportedBandwidthUL signaling, indicating a maximum uplink bandwidth supported by the UE in the non-carrier aggregation or indicate a maximum uplink bandwidth supported by the UE in the carrier aggregation; or
a supportedBandwidthDL signaling, indicating a maximum downlink bandwidth supported by the UE in the non-carrier aggregation or indicating a maximum downlink bandwidth supported by the UE in the carrier aggregation.

6. The method of any of claims 2-5, comprising:
reporting a second-type signaling, wherein the second-type signaling indicates a minimum channel bandwidth supported by the UE in the carrier aggregation, wherein the second-type signaling and the one or more BCS value are jointly used for the base station to determine the combination of channel bandwidths supported by the UE in the carrier aggregation; or the second-type signaling, the one or more BCS value and the first-type signaling are jointly used for the base station to determine the combination of channel bandwidths supported by the UE in the carrier aggregation.

7. The method of claim 6, wherein the second-type signaling comprises at least one of:
a supported minimum uplink bandwidth signaling, indicating a minimum uplink bandwidth supported by the UE in the carrier aggregation; or
a supported minimum downlink bandwidth signaling, indicating a minimum downlink bandwidth supported by the UE in the carrier aggregation.

8. The method of any of claims 2-7, comprising:
reporting a third-type signaling, wherein the third-type signaling indicates channel bandwidths supported by the UE in the carrier aggregation;
wherein the third-type signaling and the one or more BCS value are jointly used for the base station to determine the combination of channel bandwidths supported by the UE in the carrier aggregation; or
wherein the third-type signaling, the one or more BCS value and the first-type signaling are jointly used for the base station to determine the combination of channel bandwidths supported by the UE in the carrier aggregation; or
wherein the third-type signaling, the one or more BCS value, the first-type signaling and the second-type signaling are jointly used for the base station to determine the combination of channel bandwidths supported by the UE in the carrier aggregation.

9. The method of claim 8, wherein the third-type signaling comprises at least one of:
a carrier aggregation uplink channel bandwidth signaling, indicating uplink channel bandwidths supported by the UE in the carrier aggregation; or
a carrier aggregation downlink channel bandwidth signaling, indicating downlink channel bandwidths supported by the UE in the carrier aggregation.

10. A method for UE capability processing, applied to a base station, comprising:
receiving a supported bandwidth combination set (BCS) signaling;
in response to the BSC signaling carrying one or more BCS value each being a preset value, determining a combination of channel bandwidths supported by a UE in carrier aggregation based on the one or more BCS value.

11. The method of claim 10, comprising:
obtaining a first-type signaling, wherein the first-type signaling indicates channel bandwidths supported by the UE in non-carrier aggregation;
wherein determining the combination of channel bandwidths supported by the UE in carrier aggregation based on the one or more BCS value comprises:
determining the combination of channel bandwidths supported by the UE in carrier aggregation based on the one or more BCS value and the first-type signaling.

12. The method of claim 11, wherein the first-type signaling comprises at least one of:
a channelBWs-UL signaling, indicating uplink channel bandwidths supported by the UE in the non-carrier aggregation; or
a channelBWs-DL signaling, indicating downlink channel bandwidths supported by the UE in the non-carrier aggregation.

13. The method of claim 11 or 12, wherein the first-type signaling comprises at least one of:
a channelBWs-UL-v1590 signaling, indicating that an uplink channel bandwidth supported by the UE in the non-carrier aggregation is 70MHz;
a channelBWs-DL-v1590 signaling, indicating that a downlink channel bandwidth supported by the UE in the non-carrier aggregation is 70MHz; or
a channelBW-90mhz signaling, indicating that an uplink channel bandwidth and/or a downlink channel bandwidth supported by the UE in the non-carrier aggregation is 90MHz.

14. The method of any of claims 11-13, wherein the first-type signaling comprises at least one of:
a supportedBandwidthDL signaling, indicating a maximum uplink bandwidth supported by the UE in the non-carrier aggregation or indicating a maximum uplink bandwidth supported by the UE in the carrier aggregation; or
a supportedBandwidthDL signaling, indicating a maximum downlink bandwidth supported by the UE in the non-carrier aggregation or indicating a maximum downlink bandwidth supported by the UE in the carrier aggregation.

15. The method of any of claims 11-14, comprising:
obtaining a second-type signaling, wherein the second-type signaling indicates a minimum channel bandwidth supported by the UE in the carrier aggregation;
wherein determining the combination of channel bandwidths supported by the UE in carrier aggregation based on the one or more BCS value comprises one of:
determining the combination of channel bandwidths supported by the UE in carrier aggregation based on the one or more BCS value and the second-type signaling; and
determining the combination of channel bandwidths supported by the UE in carrier aggregation based on the one or more BCS value, the first-type signaling and the second-type signaling.

16. The method of claim 15, wherein the second-type signaling comprises at least one of:
a supported minimum uplink bandwidth signaling, indicating a minimum uplink bandwidth supported by the UE in the carrier aggregation or indicating a maximum uplink bandwidth supported by the UE in the carrier aggregation;
a supported minimum downlink bandwidth signaling, indicating a minimum downlink bandwidth supported by the UE in the carrier aggregation or indicating a maximum downlink bandwidth supported by the UE in the carrier aggregation.

17. The method of claim 15 or 16, wherein determining the combination of channel bandwidths supported by the UE in carrier aggregation based on the one or more BCS value and the second-type signaling comprises:
determining the combination of channel bandwidths supported by the UE in carrier aggregation based on the one or more BCS value and channel bandwidths supported by the UE indicated by the second-type signaling.

18. The method of claim 15 or 16, wherein determining the combination of channel bandwidths supported by the UE in carrier aggregation based on the one or more BCS value, the first-type signaling and the second-type signaling comprises:
determining the combination of channel bandwidths supported by the UE in carrier aggregation based on the one or more BCS value and an intersection of channel bandwidths supported by the UE indicated by the first-type signaling and channel bandwidths supported by the UE indicated by the second-type signaling.

19. The method of claim 18, wherein obtaining the first-type signaling comprises:
obtaining the first-type signaling in different sub frequency bands;
obtaining the second-type signaling comprises:
obtaining the second-type signaling in different sub frequency bands;
determining the combination of channel bandwidths supported by the UE in carrier aggregation based on the one or more BCS value, the first-type signaling and the second-type signaling comprises:
determining a combination of channel bandwidths supported by the UE in a sub frequency band based on an intersection of channel bandwidths supported by the UE indicated by the first-type signaling for the sub frequency band and channel bandwidths supported by the UE indicated by the second-type signaling for the sub frequency band; and
determining the combination of channel bandwidths supported by the UE in carrier aggregation based on a union of combinations of channel bandwidths supported by the UE in respective sub frequency bands.

20. The method of any of claims 11-19, comprising:
obtaining a third-type signaling, wherein the third-type signaling indicates channel bandwidths supported by the UE in the carrier aggregation;
wherein determining the combination of channel bandwidths supported by the UE in the carrier aggregation based on the one or more BCS value comprises at least one of:
determining the combination of channel bandwidths supported by the UE in the carrier aggregation based on the one or more BCS value and the third-type signaling;
determining the combination of channel bandwidths supported by the UE in the carrier aggregation based on the one or more BCS value, the first-type signaling and the third-type signaling; or
determining the combination of channel bandwidths supported by the UE in the carrier aggregation based on the one or more BCS value, the first-type signaling, the second-type signaling and the third-type signaling.

21. The method of claim 20, wherein the third-type signaling comprises at least one of:
a carrier aggregation uplink channel bandwidth signaling, indicating uplink channel bandwidths supported by the UE in the carrier aggregation; or
a carrier aggregation downlink channel bandwidth signaling, indicating downlink channel bandwidths supported by the UE in the carrier aggregation.

22. The method of claim 20 or 21, wherein determining the combination of channel bandwidths supported by the UE in the carrier aggregation based on the one or more BCS value, the first-type signaling and the third-type signaling comprises:
determining the combination of channel bandwidths supported by the UE in the carrier aggregation based on the one or more BCS value, an intersection of channel bandwidths supported by the UE indicated by the first-type signaling and channel bandwidths supported by the UE indicated by the third-type signaling.

23. The method of claim 20 or 21, wherein determining the combination of channel bandwidths supported by the UE in the carrier aggregation based on the one or more BCS value, the first-type signaling, the second-type signaling and the third-type signaling comprises:
determining the combination of channel bandwidths supported by the UE in the carrier aggregation based on the one or more BCS value, an intersection of channel bandwidths supported by the UE indicated by the first-type signaling, channel bandwidths supported by the UE indicated by the second-type signaling and channel bandwidths supported by the UE indicated by the third-type signaling.

24. The method of claim 21, wherein determining the combination of channel bandwidths supported by the UE in the carrier aggregation based on the one or more BCS value, the first-type signaling and the third-type signaling comprises:
in response to default configuration of the carrier aggregation uplink channel bandwidth signaling and the carrier aggregation downlink channel bandwidth signaling in the third-type signaling, determining the combination of channel bandwidths supported by the UE in the carrier aggregation based on the one or more BCS value and the first-type signaling.

25. The method of claim 21, wherein determining the combination of channel bandwidths supported by the UE in the carrier aggregation based on the one or more BCS value, the first-type signaling, the second-type signaling and the third-type signaling comprises:
in response to default configuration of the carrier aggregation uplink channel bandwidth signaling and the carrier aggregation downlink channel bandwidth signaling in the third-type signaling, determining the combination of channel bandwidths supported by the UE in the carrier aggregation based on the one or more BCS value, the first-type signaling and the second signaling.

26. An apparatus for UE capability processing, applied to a UE, comprising:
a first sending module, configured to report a supported bandwidth combination set (BCS) signaling, wherein the BCS signaling carries one or more BCS value, wherein each BCS value is a preset value, and used for a base station to determine a combination of channel bandwidths supported by a UE in carrier aggregation.

27. The apparatus of claim 26, wherein
the first sending module is configured to report a first-type signaling, wherein the first-type signaling indicates channel bandwidths supported by the UE in non-carrier aggregation, wherein the first-type signaling and the one or more BCS value are jointly used for the base station to determine the combination of channel bandwidths supported by the UE in carrier aggregation.

28. The apparatus of claim 27, wherein the first-type signaling comprises at least one of:
a channelBWs-UL signaling, indicating uplink channel bandwidths supported by the UE in the non-carrier aggregation; and
a channelBWs-DL signaling, indicating downlink channel bandwidths supported by the UE in the non-carrier aggregation.

29. The apparatus of claim 27 or 28, wherein the first-type signaling comprises at least one of:
a channelBWs-UL-v1590 signaling, indicating that an uplink channel bandwidth supported by the UE in the non-carrier aggregation is 70MHz;
a channelBWs-DL-v1590 signaling, indicating that a downlink channel bandwidth supported by the UE in the non-carrier aggregation is 70MHz;
a channelBW-90mhz signaling, indicating that an uplink channel bandwidth and/or a downlink channel bandwidth supported by the UE in the non-carrier aggregation is 90MHz.

30. The apparatus of any of claims 27-29, wherein the first-type signaling comprises at least one of:
a supportedBandwidthDL signaling, indicating a maximum uplink bandwidth supported by the UE in the non-carrier aggregation or indicate a maximum uplink bandwidth supported by the UE in the carrier aggregation;
a supportedBandwidthDL signaling, indicating a maximum downlink bandwidth supported by the UE in the non-carrier aggregation or indicate a maximum downlink bandwidth supported by the UE in the carrier aggregation.

31. The apparatus of any of claims 27-30, wherein
the first sending module is configured to report a second-type signaling, wherein the second-type signaling indicates a minimum channel bandwidth supported by the UE in the carrier aggregation, wherein the second-type signaling and the one or more BCS value are jointly used for the base station to determine the combination of channel bandwidths supported by the UE in the carrier aggregation; or the second-type signaling, the one or more BCS value and the first-type signaling are jointly used for the base station to determine the combination of channel bandwidths supported by the UE in the carrier aggregation.

32. The apparatus of claim 31, wherein the second-type signaling comprises at least one of:
a supported minimum uplink bandwidth signaling, indicating a minimum uplink bandwidth supported by the UE in the carrier aggregation;
a supported minimum downlink bandwidth signaling, indicating a minimum downlink bandwidth supported by the UE in the carrier aggregation.

33. The apparatus of any of claims 27-32, comprising
reporting a third-type signaling, wherein the third-type signaling indicates channel bandwidths supported by the UE in the carrier aggregation;
wherein the third-type signaling and the one or more BCS value are jointly used for the base station to determine the combination of channel bandwidths supported by the UE in the carrier aggregation; or the third-type signaling, the one or more BCS value and the first-type signaling are jointly used for the base station to determine the combination of channel bandwidths supported by the UE in the carrier aggregation; or the third-type signaling, the one or more BCS value, the first-type signaling and the second-type signaling are jointly used for the base station to determine the combination of channel bandwidths supported by the UE in the carrier aggregation.

34. The apparatus of claim 33, wherein the third-type signaling comprises at least one of:
a carrier aggregation uplink channel bandwidth signaling, indicating uplink channel bandwidths supported by the UE in the carrier aggregation;
a carrier aggregation downlink channel bandwidth signaling, indicating downlink channel bandwidths supported by the UE in the carrier aggregation.

35. An apparatus for UE capability processing, applied to a base station, comprising:
a second receiving module, configured to receive a supported bandwidth combination set (BCS) signaling;
a processing module, configured to, in response to the BSC signaling carrying one or more BCS value each being a preset value, determine a combination of channel bandwidths supported by a UE in carrier aggregation based on the one or more BCS value.

36. The apparatus of claim 35, comprising:
an obtaining module, configured to obtain a first-type signaling, wherein the first-type signaling indicates channel bandwidths supported by the UE in non-carrier aggregation;
wherein the processing module is configured to determine the combination of channel bandwidths supported by the UE in carrier aggregation based on the one or more BCS value and the first-type signaling.

37. The apparatus of claim 36, wherein the first-type signaling comprises at least one of:
a channelBWs-UL signaling, indicating uplink channel bandwidths supported by the UE in the non-carrier aggregation; and
a channelBWs-DL signaling, indicating downlink channel bandwidths supported by the UE in the non-carrier aggregation.

38. The apparatus of claim 36 or 37, wherein the first-type signaling comprises at least one of:
a channelBWs-UL-v1590 signaling, indicating that an uplink channel bandwidth supported by the UE in the non-carrier aggregation is 70MHz;
a channelBWs-DL-v1590 signaling, indicating that a downlink channel bandwidth supported by the UE in the non-carrier aggregation is 70MHz;
a channelBW-90mhz signaling, indicating that an uplink channel bandwidth and/or a downlink channel bandwidth supported by the UE in the non-carrier aggregation is 90MHz.

39. The apparatus of any of claims 36-38, wherein the first-type signaling comprises at least one of:
a supportedBandwidthDL signaling, indicating a maximum uplink bandwidth supported by the UE in the non-carrier aggregation or indicate a maximum uplink bandwidth supported by the UE in the carrier aggregation;
a supportedBandwidthDL signaling, indicating a maximum downlink bandwidth supported by the UE in the non-carrier aggregation or indicate a maximum downlink bandwidth supported by the UE in the carrier aggregation.

40. The apparatus of any of claims 36-39, wherein
the obtaining module is configured to obtain a second-type signaling, wherein the second-type signaling indicates a minimum channel bandwidth supported by the UE in the carrier aggregation;
wherein the processing module is configured to: determine the combination of channel bandwidths supported by the UE in carrier aggregation based on one or more BCS value and the second-type signaling; determine the combination of channel bandwidths supported by the UE in carrier aggregation based on the one or more BCS value, the first-type signaling and the second-type signaling.

41. The apparatus of claim 40, wherein the second-type signaling comprises at least one of:
a supported minimum uplink bandwidth signaling, indicating a minimum uplink bandwidth supported by the UE in the carrier aggregation;
a supported minimum downlink bandwidth signaling, indicating a minimum downlink bandwidth supported by the UE in the carrier aggregation.

42. The apparatus of claim 40 or 41, wherein
the processing module is configured to determine the combination of channel bandwidths supported by the UE in carrier aggregation based on the one or more BCS value and channel bandwidths supported by the UE indicated by the second-type signaling.

43. The apparatus of claim 40 or 41, wherein
the processing module is configured to determine the combination of channel bandwidths supported by the UE in carrier aggregation based on the one or more BCS value and an intersection of channel bandwidths supported by the UE indicated by the first-type signaling and channel bandwidths supported by the UE indicated by the second-type signaling.

44. The apparatus of claim 43, wherein
the obtaining module is configured to obtain the first-type signaling in different sub frequency bands; and obtain the second-type signaling in different sub frequency bands;
the processing module is configured to determine a combination of channel bandwidths supported by the UE in a sub frequency band based on an intersection of channel bandwidths supported by the UE indicated by the first-type signaling for the sub frequency band and channel bandwidths supported by the UE indicated by the second-type signaling for the sub frequency band; and determine the combination of channel bandwidths supported by the UE in carrier aggregation based on a union of combinations of channel bandwidths supported by the UE in respective sub frequency bands.

45. The apparatus of any of claims 36-44, wherein
the obtaining module is configured to obtain a third-type signaling, wherein the third-type signaling indicates channel bandwidths supported by the UE in the carrier aggregation;
wherein the processing module is configured to perform one of:
determining the combination of channel bandwidths supported by the UE in the carrier aggregation based on the one or more BCS value and the third-type signaling;
determining the combination of channel bandwidths supported by the UE in the carrier aggregation based on the one or more BCS value, the first-type signaling and the third-type signaling;
determining the combination of channel bandwidths supported by the UE in the carrier aggregation based on the one or more BCS value, the first-type signaling, the second-type signaling and the third-type signaling.

46. The apparatus of claim 45, wherein the third-type signaling comprises at least one of:
a carrier aggregation uplink channel bandwidth signaling, indicating uplink channel bandwidths supported by the UE in the carrier aggregation;
a carrier aggregation downlink channel bandwidth signaling, indicating downlink channel bandwidths supported by the UE in the carrier aggregation.

47. The apparatus of claim 45 or 46, wherein
the processing module is configured to determine the combination of channel bandwidths supported by the UE in the carrier aggregation based on the one or more BCS value, an intersection of channel bandwidths supported by the UE indicated by the first-type signaling and channel bandwidths supported by the UE indicated by the third-type signaling.

48. The apparatus of claim 45 or 46, wherein
the processing module is configured to determine the combination of channel bandwidths supported by the UE in the carrier aggregation based on the one or more BCS value, an intersection of channel bandwidths supported by the UE indicated by the first-type signaling, channel bandwidths supported by the UE indicated by the second-type signaling and channel bandwidths supported by the UE indicated by the third-type signaling.

49. The apparatus of claim 46, wherein
the processing module is configured to, in response to default configuration of the carrier aggregation uplink channel bandwidth signaling and the carrier aggregation downlink channel bandwidth signaling in the third-type signaling, determine the combination of channel bandwidths supported by the UE in the carrier aggregation based on the one or more BCS value and the first-type signaling.

50. The apparatus of claim 49, wherein
the processing module is configured to, in response to default configuration of the carrier aggregation uplink channel bandwidth signaling and the carrier aggregation downlink channel bandwidth signaling in the third-type signaling, determine the combination of channel bandwidths supported by the UE in the carrier aggregation based on the one or more BCS value, the first-type signaling and the second signaling.

51. A communication device, comprising:
a processor; and
a memory configured to store instructions executable by the processor,
wherein the processor is configured to implement the method for UE capability processing according to any of claims 1-10, or the method for UE capability processing according to any of claims 11-25, when running the executable instructions.

52. A computer storage medium, wherein the computer storage medium is stored with a computer executable program, wherein when the executable program is executed by a processor, the method for UE capability processing according to any of claims 1-10, or the method for UE capability processing according to any of claims 11-25 is implemented.
